# EUROPEAN PATENT APPLICATION

(11) **EP 4 520 566 A1**
(43) Date of publication of application: **12.03.2025**
(21) Application number: 24196508.6
(22) Date of filing: 26.08.2024
(51) Int. Cl.: B60K 1/04

(54) **WORK MACHINE**

(30) Priority: 11.09.2023 JP 2023146603; 11.09.2023 JP 2023146604; 11.09.2023 JP 2023146605
(71) Applicant: Yanmar Holdings Co., Ltd., Osaka-shi, Osaka (JP)
(72) Inventor: BELSNER, Viktor, 74564 Crailsheim (DE); KOHLRAUTZ, Ulf, 74564 Crailsheim (DE)
(74) Representative: Novagraaf International SA

(57) **Abstract**

[Problem] To provide a work machine capable of improving maintainability of a battery unit, or a work machine capable of easily performing efficient charging of the battery unit.

[Solution] A work machine 3 includes a battery unit 50, a battery support portion 7, a first charger 51, and a second charger 52. The battery unit 50 is disposed in an engine room 300 and supplies electric power to an electric motor. The battery support portion 7 supports the battery unit 50 and is removably fixed to a machine body frame 40. The battery support portion 7 has an insertion portion 71 into which a jig for attaching and detaching the battery unit 50 can be inserted from one side in a front-rear direction D2. The first charger 51 is disposed in the engine room 300 and charges the battery unit 50 with electric power supplied from an external power supply. The second charger 52 is disposed in the engine room 300 and charges the battery unit 50 with electric power supplied from the external power supply. The work machine 3 has, as a charging mode of the battery unit, a normal charging mode in which charging is performed by the first charger 51 alone and a quick charging mode in which charging is performed by the first charger 51 and the second charger 52.

## Description

### TECHNICAL FIELD

The present invention relates to a work machine including an electric motor.

### BACKGROUND ART

As a related art, there is known a work machine (wheel loader or motor grader) including a front vehicle body to which front wheels and a work implement are attached, a rear vehicle body, and an electric motor mounted on the rear vehicle body as a power source (for example, see Patent Document 1 and Patent Document 2).

This work machine includes a plurality of drive batteries that are power sources of the electric motor, and an electric cooling fan that supplies cooling air to the plurality of drive batteries. The electric cooling fan is provided at the rear of the vehicle body. The plurality of drive batteries are collected at least as a pair of first battery units disposed on both left and right sides in front of the electric cooling fan with a space therebetween, and second and third battery units disposed in front of the electric cooling fan with a space with respect to the electric cooling fan. In a plan view, an intake space surrounded by the electric cooling fan and the first to third battery units is formed. Further, this work machine includes an inverter, a battery unit, and a charging device. The inverter converts electric power stored in the battery and supplies the converted electric power to the electric motor. The charging device is a device for charging the battery. The charging device has a connector connected to an external power supply, and charges the battery with direct-current power.

### PRIOR ART DOCUMENT

### PATENT DOCUMENT

Patent Document 1: Japanese Unexamined Patent Application Publication No. 2012-201188
Patent Document 2: Japanese Unexamined Patent Application Publication No. 2021-055359

### SUMMARY OF INVENTION

### TECHNICAL PROBLEM

In the related art, maintenance of the battery unit is difficult due to the heavy weight of the battery unit. Further, in the related art, for example, when the work machine is used all day, if the battery is charged in a short time by using a lunch break or the like, the battery may not be sufficiently charged to cover the work in the afternoon. Furthermore, in the related art, cooling of an electrical device other than the battery unit is not taken into consideration, and as a result, it is difficult to efficiently cool the battery unit and the electrical device.

An object of the present invention is to provide a work machine capable of improving maintainability of a battery unit, a work machine capable of easily performing efficient charging of the battery unit, or a work machine capable of easily achieving efficient cooling of the battery unit and an electrical device.

### SOLUTION TO PROBLEM

A work machine according to one aspect of the present invention includes a battery unit and a battery support portion. The battery unit supplies electric power to the electric motor. The battery support portion supports the battery unit and is removably fixed to the machine body frame. The battery support portion has an insertion portion into which a jig for attaching and detaching the battery unit can be inserted from one side in the front-rear direction. Further, a work machine according to one aspect of the present invention includes a battery unit, a first charger, and a second charger. The battery unit is disposed in an engine room and supplies electric power to the electric motor. The first charger is disposed in the engine room and charges the battery unit with electric power supplied from an external power supply. The second charger is disposed in the engine room and charges the battery unit with electric power supplied from the external power supply. The work machine has, as a charging mode of the battery unit, a normal charging mode in which charging is performed by the first charger alone and a quick charging mode in which charging is performed by the first charger and the second charger. Furthermore, a work machine according to one aspect of the present invention includes a battery unit, a cooling device, and an electrical device. The battery unit supplies electric power to at least the electric motor, and is disposed in an air-cooled space constituting a part of the engine room having a first opening portion and a second opening portion. The cooling device generates an airflow passing through the air-cooled space at least from the first opening portion toward the second opening portion. The electrical device is disposed in the air-cooled space.

### ADVANTAGEOUS EFFECTS OF INVENTION

According to the present invention, it is possible to provide a work machine capable of improving maintainability of a battery unit, a work machine capable of easily performing efficient charging of the battery unit, or a work machine capable of easily achieving efficient cooling of the battery unit and an electrical device.

### BRIEF DESCRIPTION OF DRAWINGS

FIG. 1 is a schematic perspective view illustrating an overall configuration of a work machine according to a first embodiment, as viewed from the left front.
FIG. 2 is a schematic perspective view illustrating the overall configuration of the work machine according to the first embodiment, as viewed from the right rear.
FIG. 3 is a schematic block diagram illustrating the work machine according to the first embodiment.
FIG. 4 is a schematic plan view illustrating an internal structure of the work machine according to the first embodiment.
FIG. 5 is a schematic perspective view illustrating an internal structure of a rear section of the work machine according to the first embodiment, as viewed from the right rear.
FIG. 6 is a schematic perspective view illustrating the internal structure of the rear section of the work machine according to the first embodiment, which is taken along the line A1 - A1 in FIG. 4 and viewed from the right rear.
FIG. 7 is a rear view illustrating the internal structure of the rear section of the work machine according to the first embodiment, which is taken along the line A1 - A1 in FIG. 4.
FIG. 8 is a schematic perspective view illustrating the internal structure of the rear section of the work machine according to the first embodiment, as viewed from the right rear.
FIG. 9 is a schematic perspective view illustrating the internal structure of the rear section of the work machine according to the first embodiment, as viewed from the left front.
FIG. 10 is a schematic perspective view illustrating a battery unit of the work machine according to the first embodiment.
FIG. 11 is a schematic left side view illustrating the internal structure of the rear section of the work machine according to the first embodiment.
FIG. 12 is a schematic perspective view illustrating the internal structure of the rear section of the work machine according to the first embodiment, as viewed from the right rear.
FIG. 13 is a schematic perspective view illustrating the internal structure of the rear section of the work machine according to the first embodiment, as viewed from the left front.
FIG. 14 is a schematic perspective view illustrating a state where the battery unit of the rear section of the work machine according to the first embodiment is removed, as viewed from the right rear.
FIG. 15 is a schematic perspective view illustrating a state where the battery unit of the rear section of the work machine according to the first embodiment is removed, as viewed from the left front.
FIG. 16 is a schematic perspective view illustrating the internal structure of the rear section of the work machine according to the first embodiment, as viewed from the left front.
FIG. 17 is a schematic perspective view illustrating the internal structure of the rear section of the work machine according to the first embodiment, as viewed from the right front.
FIG. 18 is a schematic perspective view illustrating the internal structure of the rear section of the work machine according to the first embodiment, as viewed obliquely from the lower right front side.
FIG. 19 is a schematic front view illustrating the internal structure of the rear section of the work machine according to the first embodiment.
FIG. 20 is a schematic plan view illustrating the internal structure of the rear section of the work machine according to the first embodiment.

### DESCRIPTION OF EMBODIMENTS

Hereinafter, embodiments of the present invention will be described with reference to the accompanying drawings. The following embodiments are examples that embody the present invention, and do not intend to limit the technical scope of the present invention.

### (First Embodiment)

### [1] Overall Configuration

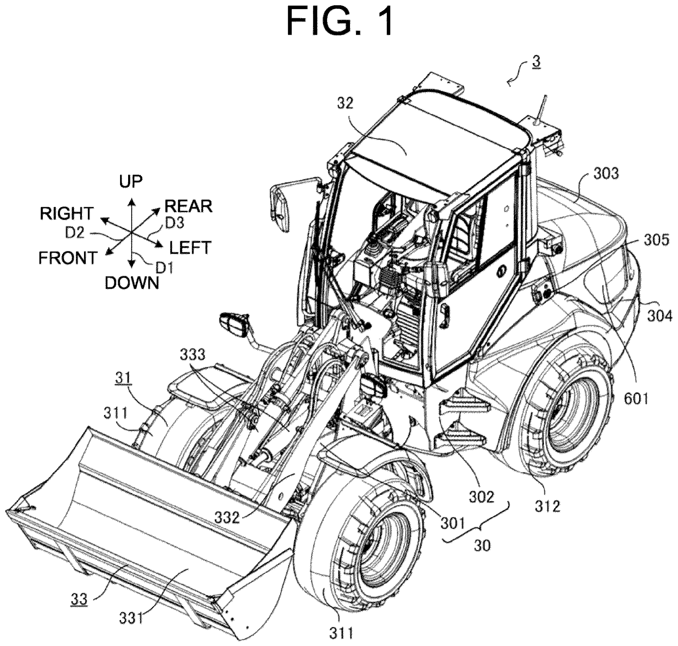

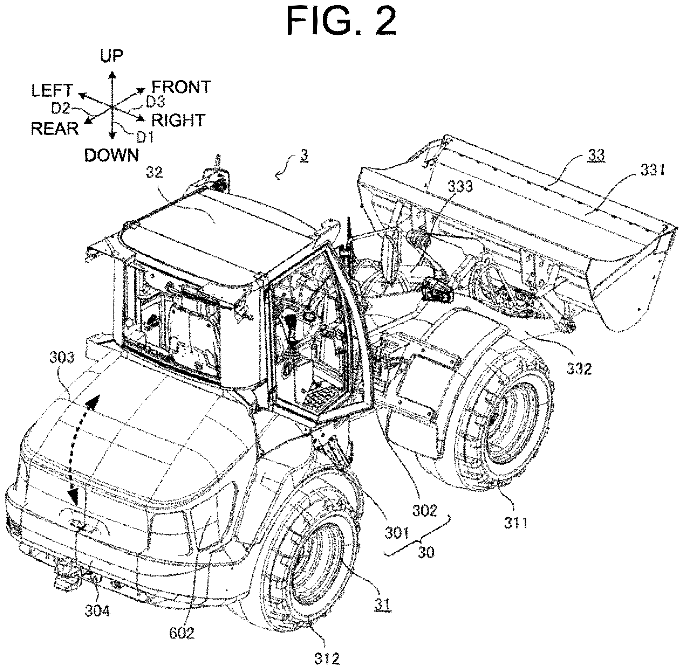

As illustrated in FIGs. 1 and 2, a work machine 3 according to the present embodiment includes, in a machine body 30, a traveling unit 31, a driving unit 32, and a working unit 33.

The "work machine" referred to in the present disclosure means various types of work machines and is, for example, a work vehicle such as a wheel loader, a backhoe (including a hydraulic excavator, a mini excavator, and the like), and a carrier. The work machine 3 includes the working unit 33 that is configured to be able to perform one or more works including at least a loading work. The work machine 3 is not limited to a "vehicle" and may be, for example, a working vessel, a working flying object such as a drone or a multicopter, or the like. Moreover, the work machine 3 is not limited to a construction machine (construction equipment), but may also be an agricultural machine (agricultural equipment), such as a rice transplanter, a tractor, or a combined harvester, for example. In the present embodiment, unless otherwise specified, a case where the work machine 3 is a riding-type wheel loader which can perform a transport work, an excavation work, a ground leveling work, a suspending work or the like in addition to the loading work as the works will be explained as an example.

Further, in this embodiment, a vertical direction in a usable state of the work machine 3 will be defined as an up-down direction D1 for convenience of description. Furthermore, a front-rear direction D2 and a left-right direction D3 are defined with reference to a direction as viewed from a user (operator) on board (the driving unit 32 of) the work machine 3. In other words, each of the directions used in this embodiment is a direction that is defined with the machine body 30 of the work machine 3 as a reference, and a direction in which the machine body 30 moves in a forward travel of the work machine 3 is a "front", and a direction in which the machine body 30 moves in a reverse travel of the work machine 3 is a "rear". Similarly, a direction in which the machine body 30 moves at a right turn of the work machine 3 is a "right", and a direction in which the machine body 30 moves at a left turn of the work machine 3 is a "left". However, these directions are not meant to limit a direction in which the work machine 3 is used (direction during use).

In the present embodiment, as described above, such a case that the work machine 3 is a riding-type wheel loader is assumed, and thus the working unit 33 is driven in accordance with an operation of a user (operator) on board the driving unit 32 and performs a work such as a loading work.

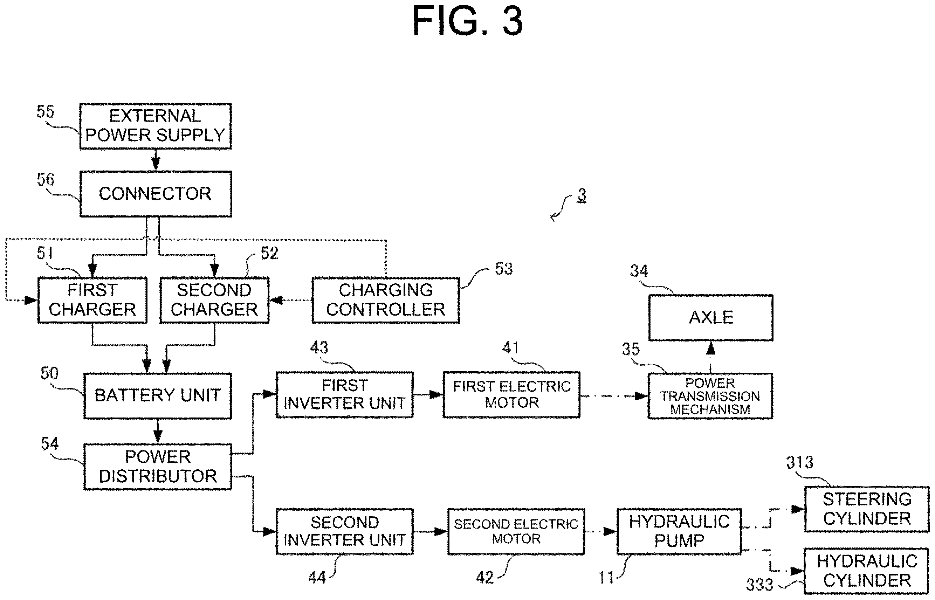

The traveling unit 31 has a traveling function, and is so configured as to be capable of traveling (including swiveling) on the ground. The traveling unit 31 includes, for example, a pair of left and right front wheels 311 and a pair of left and right rear wheels 312. The traveling unit 31 further includes a steering cylinder 313 (see FIG. 3) for steering.

In the work machine 3 as a wheel loader, the machine body 30 is of a center-folding type and is configured in such a manner that the machine body 30 is folded at a connecting portion provided at a position between the front wheels 311 and the rear wheels 312.

That is, in a state where a front portion 301 of the machine body 30 where the front wheels 311 are provided is bent to the right with respect to a rear portion 302 where the rear wheels 312 are provided, the machine body 30 travels while turning to the right direction by being driven forward by the traveling unit 31. On the other hand, in a state where the front portion 301 of the machine body 30 where the front wheels 311 are provided is bent to the left with respect to the rear portion 302 where the rear wheels 312 are provided, the machine body 30 travels while turning to the left direction by being driven forward by the traveling unit 31. The steering of the traveling unit 31 as above is performed by the front portion 301 of the machine body 30 driven to swing (rotate in both directions) about the connecting portion by the steering cylinder 313 in conjunction with the operation of a steering wheel of an operation device.

The driving unit 32 where the user is on board is provided above the traveling unit 31. Specifically, the driving unit 32 is disposed on a portion on the rear side of the connecting portion in the machine body 30, that is, on a rear portion 302 where the rear wheels 312 are provided.

The working unit 33 is configured to be able to perform works including a loading work. The working unit 33 has a bucket 331, an arm 332, and the like. The working unit 33 further has hydraulic actuators (including the hydraulic cylinders 333, and the like) for driving each part.

The bucket 331 is a type of attachment (work tool) that is attached to the machine body 30 of the work machine 3, and is made up of any tool selected from a plurality of types of attachments depending on the type of work to be performed.

The bucket 331 is, as an example, removably attached to the machine body 30 and replaced in accordance with the contents of a work. The attachment for the work machine 3 includes various implements such as a fork, a snow blade, and a plow and the like in addition to the bucket 331, for example.

The arm 332 is rotatably attached to the machine body 30. Specifically, the arm 332 is supported rotatably about a rotary shaft along a horizontal direction. The bucket 331 is attached to a distal end of the arm 332.

The work machine 3 has a hood 303 and a counterweight 304 in the rear portion 302 of the machine body 30.

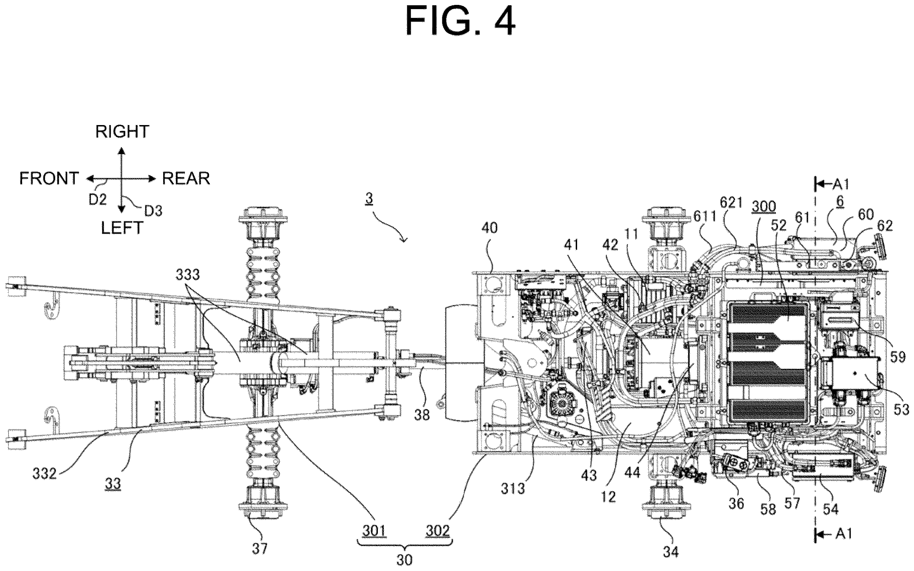

The hood 303 is located behind the driving unit 32 and is configured to cover an engine room 300 (see FIG. 4) from above. The hood 303 can be opened and closed as indicated by a broken line arrow in FIG. 2 by rotating about a rotary shaft provided at a front end portion of the hood 303. The engine room 300 is exposed in a state where the hood 303 is opened.

The counterweight 304 is located below the hood 303 in rear end portion (back surface) of (the rear portion 302 of) the machine body 30. The counterweight 304 is removably attached to the machine body 30.

The work machine 3 according to the present embodiment is an electric work machine including an electric motor 41 (see FIG. 3) as a power source. The electric motor 41 is an electric motor driven by receiving electric power supply. The work machine 3 according to the present embodiment drives an axle 34 (see FIG. 3) of the traveling unit 31 by power generated by the electric motor 41.

Further, the work machine 3 according to the present embodiment further includes a second electric motor 42 (see FIG. 3) in addition to the electric motor (first electric motor) 41 for driving the traveling unit 31. The second electric motor 42 is an electric motor driven by receiving electric power supply. The second electric motor 42 drives the hydraulic pump 11 (see FIG. 3), and causes the hydraulic pump 11 to supply hydraulic oil to hydraulic actuators (including the steering cylinder 313, the hydraulic cylinder 333 of the working unit 33, and the like) of various parts of the machine body 30, thereby driving the machine body 30.

The first electric motor 41 and the second electric motor 42 are operated by electric power supplied from a battery unit 50 (see FIG. 3). Therefore, the machine body 30 is provided with a power supply port 305 (see FIG. 1) for charging the battery unit 50. In the present embodiment, as an example, the power supply port 305 is disposed at a position on the left side surface of the machine body 30 and above the rear wheels 312.

The configuration of the drive system including the first electric motor 41 and the second electric motor 42 will be described in detail in the section "[2] Drive System".

Further, in addition to the above-described configuration, the machine body 30 further includes a detector (including a sensor, a camera, and the like) for monitoring the periphery of the control system, display device, operation device, machine body 30, a sound outputter, a communication terminal, a fuel tank, a battery and the like. Furthermore, the machine body 30 includes sensors for monitoring the operation state of the machine body 30, such as a fuel residual-quantity gauge, a cooling-water temperature sensor, a hydraulic-oil temperature sensor, a rotation number meter for measuring the number of engine rotations, a speedometer for measuring a traveling speed, an hour meter for measuring an operating time and the like.

The control system mainly includes a computer system including one or more processors such as a central processing unit (CPU) and one or more memories such as a read only memory (ROM) and a random access memory (RAM), and performs various types of processing (information processing). In the present embodiment, the control system is an integrated controller that controls the entire work machine 3, and includes an electronic control unit (ECU), for example.

The display device is disposed in the driving unit 32 of the machine body 30, and is a user interface that accepts an operation input by the user (the operator) and outputs various types of information to the user. The display device accepts various operations from the user by outputting an electrical signal that corresponds to the user's operation.

The operation device is disposed in the driving unit 32 of the machine body 30 and accepts an operation input by the user (operator). In the present embodiment, as an example, the operation device includes an operation lever, a steering wheel, and the like. The user (operator) on board the driving unit 32 of the machine body 30 operates the operation device to control the work machine 3.

### [2] Drive System

Next, a configuration of a drive system for driving each part of the work machine 3 according to the present embodiment will be described with reference to FIGs. 3 and 4. In FIG. 3, a flow of an electric signal for control (weak electric system) is indicated by a broken line arrow, a flow of electric power (strong electric system) is indicated by a solid line arrow, and a flow of power (including hydraulic pressure) is indicated by a one dot chain line arrow.

As described above, the work machine 3 is an electric work machine including the electric motor (first electric motor) 41 as a power source. In the present embodiment, in particular, the work machine 3 includes two electric motors, that is, the first electric motor 41 that generates power for driving the axle 34 of the traveling unit 31, and the second electric motor 42 that drives the hydraulic pump 11 that feeds hydraulic oil to the hydraulic actuators.

That is, the work machine 3 drives the axle 34 of the traveling unit 31 and the hydraulic pump 11 by separate electric motors (the first electric motor 41 and the second electric motor 42). In the present disclosure, of the first electric motor 41 and the second electric motor 42, the first electric motor 41 may be simply referred to as an "electric motor 41".

The traveling unit 31 further includes the axle 34 for driving the front wheels 311 and the rear wheels 312, the power transmission mechanism 35, the steering cylinder 313, and the like. The power transmission mechanism 35 transmits power generated by the electric motor 41 to the axle 34. That is, the power generated by the first electric motor 41 is transmitted to the axle 34 via the power transmission mechanism 35.

Meanwhile, the steering cylinder 313 is an example of the hydraulic actuators that operate by receiving a supply of hydraulic oil from the hydraulic pump 11, and is indirectly driven by the second electric motor 42. Further, the hydraulic cylinder 333 of the working unit 33 is also an example of the hydraulic actuators that operate by receiving the supply of the hydraulic oil from the hydraulic pump 11, and the hydraulic oil from the hydraulic pump 11 is also supplied to the hydraulic cylinder 333.

In the present embodiment, as an example, the first electric motor 41 is an alternating-current motor that is driven by alternating-current power (alternating-current voltage) supplied from the first inverter unit 43. Similarly, the second electric motor 42 is an alternating-current motor that is driven by alternating-current power (alternating-current voltage) supplied from the second inverter unit 44.

That is, as illustrated in FIG. 3, the work machine 3 further includes the first inverter unit 43 for driving the first electric motor 41 and the second inverter unit 44 that drives the second electric motor 42. The first inverter unit 43 drives the electric motor (first electric motor) 41 by electric power supplied from the battery unit 50. The second inverter unit 44 drives the second electric motor 42 by electric power supplied from the battery unit 50.

The first inverter unit 43 includes a power conversion circuit that converts direct-current power into alternating-current power, converts the direct-current power (direct-current voltage) output from the battery unit 50 into alternating-current power (alternating-current voltage), and outputs the alternating-current power to the first electric motor 41. Accordingly, the first electric motor 41 including an alternating-current motor operates in accordance with the alternating-current power supplied from the first inverter unit 43.

Similarly, the second inverter unit 44 includes a power conversion circuit that converts direct-current power into alternating-current power, converts the direct-current power (direct-current voltage) output from the battery unit 50 into alternating-current power (alternating-current voltage), and outputs the alternating-current power to the second electric motor 42. Accordingly, the second electric motor 42 including an alternating-current motor operates in accordance with the alternating-current power supplied from the second inverter unit 44.

That is, the work machine 3 drives the first electric motor 41 and the second electric motor 42 by separate inverter units (the first inverter unit 43 and the second inverter unit 44). In the present disclosure, of the first inverter unit 43 and the second inverter unit 44, the first inverter unit 43 may be simply referred to as an "inverter unit 43".

As illustrated in FIG. 3, the work machine 3 further includes the battery unit 50, a first charger 51, a second charger 52, a charging controller 53, and a power distributor 54.

The battery unit 50 is a power storage device that stores electric energy, and is used as a supply source (power supply) of electric power to at least the first electric motor 41 and the second electric motor 42.

The battery unit 50 is provided separately from an auxiliary battery 36 (see FIG. 4) which will be described below, and is configured by combining a plurality of large-capacity secondary batteries (storage batteries) such as lithium ion batteries, for example.

The first charger 51 and the second charger 52 are chargers for charging the battery unit 50. The first charger 51 charges the battery unit 50 with electric power supplied from an external power supply 55. Similarly, the second charger 52 charges the battery unit 50 with the electric power supplied from the external power supply 55.

The first charger 51 and the second charger 52 are electrically connected to a connector 56 provided in the power supply port 305. When a system power supply (alternating current power supply) serving as the external power supply 55 is electrically connected to the connector 56 of the power supply port 305 using a charging cable, the first charger 51 and the second charger 52 are electrically connected to the external power supply 55 via the connector 56. In this state, each of the first charger 51 and the second charger 52 charges the battery unit 50 with electric power supplied from the external power supply 55.

In the present embodiment, as an example, each of the first charger 51 and the second charger 52 includes a conversion circuit (converter) that converts an alternating-current voltage into a direct-current voltage. Each of the first charger 51 and the second charger 52 converts an alternating-current voltage applied from the external power supply 55 into a direct-current voltage and supplies the direct-current voltage to the battery unit 50, thereby charging the battery unit 50.

Here, the first charger 51 can charge the battery unit 50 by itself, and the second charger 52 can charge the battery unit 50 together with the first charger 51. The first charger 51 and the second charger 52 are electrically connected in parallel to the battery unit 50, and when charging is performed by both the first charger 51 and the second charger 52, it is possible to charge the battery unit 50 with a larger current than when charging is performed by the first charger 51 alone.

In short, the work machine 3 according to the present embodiment has at least two charging modes of a "normal charging mode" and a "quick charging mode" as the charging mode of the battery unit 50. The "normal charging mode" is a charging mode in which the battery unit 50 is charged by the first charger 51 alone. The "quick charging mode" is a charging mode in which the battery unit 50 is charged by both the first charger 51 and the second charger 52. Therefore, in the "quick charging mode", charging of the battery unit 50 can be completed in a shorter time than in the "normal charging mode".

The charging controller 53 controls the first charger 51 and the second charger 52. Specifically, the charging controller 53 outputs a control signal to each of the first charger 51 and the second charger 52 to switch at least each of the first charger 51 and the second charger 52 between operation and stop. That is, the charging controller 53 can switch the charging mode of the battery unit 50 between the normal charging mode in which charging is performed by the first charger 51 alone and the quick charging mode in which charging is performed by the first charger 51 and the second charger 52.

The power distributor 54 is a device that distributes electric power from the battery unit 50 to a plurality of electric loads. The power distributor 54 is a power distribution unit (PDU), and distributes electric power from the battery unit 50 to at least the first inverter unit 43 and the second inverter unit 44.

That is, the battery unit 50, the first inverter unit 43, and the second inverter unit 44 are electrically connected to the power distributor 54. The power distributor 54 supplies direct-current power (direct-current voltage) output from the battery unit 50 during discharging of the battery unit 50 to the first inverter unit 43 and the second inverter unit 44. Accordingly, the first inverter unit 43 and the second inverter unit 44 can be operated to drive the first electric motor 41 and the second electric motor 42.

FIG. 4 is a plan view of the work machine 3 in which illustrations of exterior materials including a fender, a mirror, a direction indicator, a body, the hood 303, the counterweight 304, and the like, the driving unit 32, the bucket 331, the front wheels 311, the rear wheels 312, and the like are omitted. As illustrated in FIG. 4, the work machine 3 includes a rear axle 34 provided in the rear portion 302 of the machine body 30, and a front axle 37 provided in the front portion 301 of the machine body 30.

The rear wheels 312 are attached to the rear axle 34, and the rear wheels 312 rotate when the rear axle 34 is driven. The front wheels 311 are attached to the front axle 37, and the front wheels 311 rotate when the rear axle 34 is driven. In the present disclosure, of the rear axle 34 and the front axle 37, the rear axle 34 may be simply referred to as an "axle 34".

In the present embodiment, the first electric motor 41 and the power transmission mechanism 35 are mounted on the rear portion 302 of the machine body 30 together with the axle (rear axle) 34. The front axle 37 disposed in the front portion 301 is connected to the power transmission mechanism 35 disposed in the rear portion 302 by a shaft 38. That is, the power generated by the first electric motor 41 is transmitted to the front axle 37 via the power transmission mechanism 35 and the shaft 38.

Further, the devices of the drive system such as the second electric motor 42, the first inverter unit 43, the second inverter unit 44, the battery unit 50, the first charger 51, the second charger 52, the charging controller 53, and the power distributor 54 are also disposed in the rear portion 302 similarly to the first electric motor 41 and the like. In the present embodiment, the second electric motor 42 and the hydraulic pump 11 are integrated (see FIG. 4). Therefore, the hydraulic pump 11 is also disposed in the rear portion 302 similarly to the first electric motor 41 and the like.

In the rear portion 302 of the machine body 30, an engine room 300 is formed as a space for accommodating these devices of the drive system. The specific arrangement and the like of these devices of the drive system in the engine room 300 will be described in the section "[3] Configuration of Engine Room".

According to the drive system described above, the work machine 3 can operate using electric power stored in the battery unit 50 in a state where the battery unit 50 is charged.

That is, the work machine 3 drives the axle 34 of the traveling unit 31 by the power generated by the first electric motor 41. Further, the work machine 3 drives the hydraulic pump 11 by the power generated by the second electric motor 42, and supplies the hydraulic oil from the hydraulic pump 11 to the steering cylinder 313 which is an example of the hydraulic actuators. Accordingly, the work machine 3 can operate the traveling unit 31 (including the axle 34 and the steering cylinder 313) to travel (including turning) on the ground.

Further, the work machine 3 drives the hydraulic pump 11 by the power generated by the second electric motor 42, and supplies the hydraulic oil from the hydraulic pump 11 to the hydraulic cylinder 333 of the working unit 33, which is an example of the hydraulic actuators. Accordingly, for example, when the hydraulic oil is supplied to the hydraulic cylinder 333 serving as the bucket cylinder, the work machine 3 operates the working unit 33 in such a manner that the holding and returning by the bucket 331 is performed. Further, when the hydraulic oil is supplied to the hydraulic cylinder 333 serving as a boom cylinder (lift cylinder), the work machine 3 operates the working unit 33 in such a manner that the bucket 331 is raised and lowered by the up and down movement of the arm 332.

In this way, the work machine 3 can drive the first electric motor 41 and the second electric motor 42 by the electric power stored in the battery unit 50, and can drive each part of the work machine 3 including the traveling unit 31 and the working unit 33.

### [3] Configuration in Engine Room

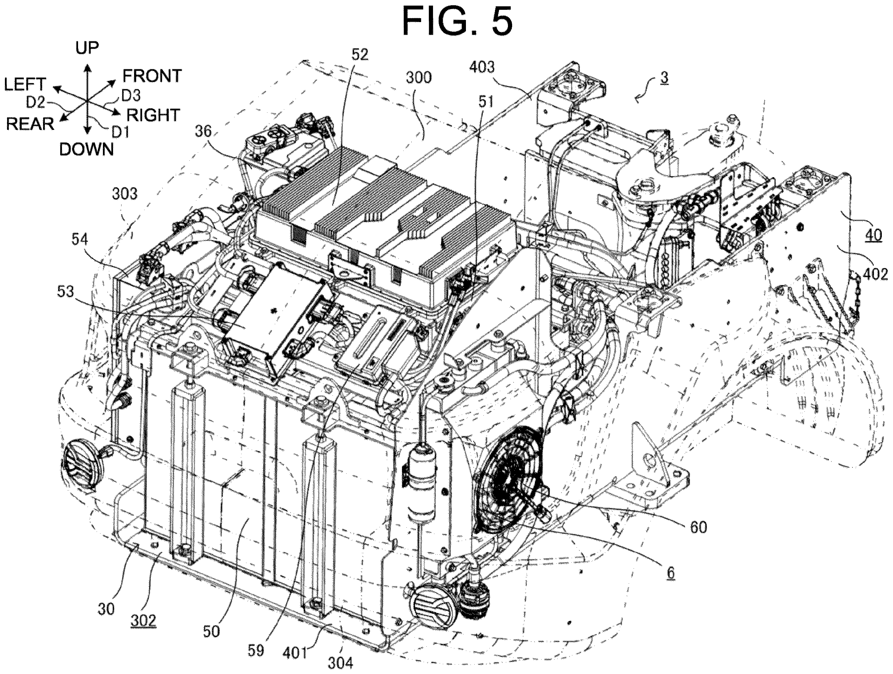

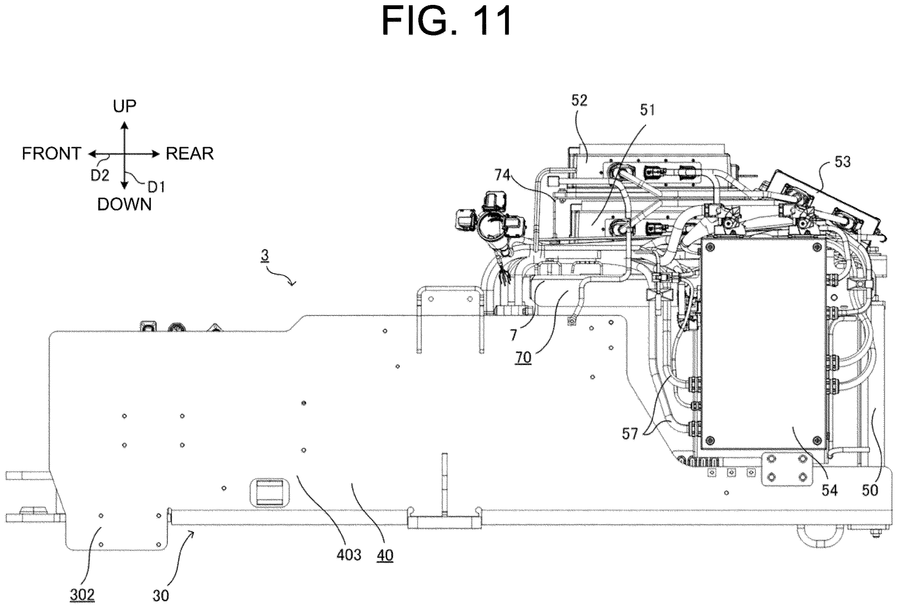

Next, a configuration in the engine room 300 of the work machine 3 according to the present embodiment will be described with reference to FIGs. 5 to 20. In FIGs. 5 to 20, of the front portion 301 and the rear portion 302 of the machine body 30, only the rear portion 302 is illustrated, and illustrations of components irrelevant to the description of the engine room 300, such as the driving unit 32, the working unit 33, and the rear wheels 312, are omitted as appropriate.

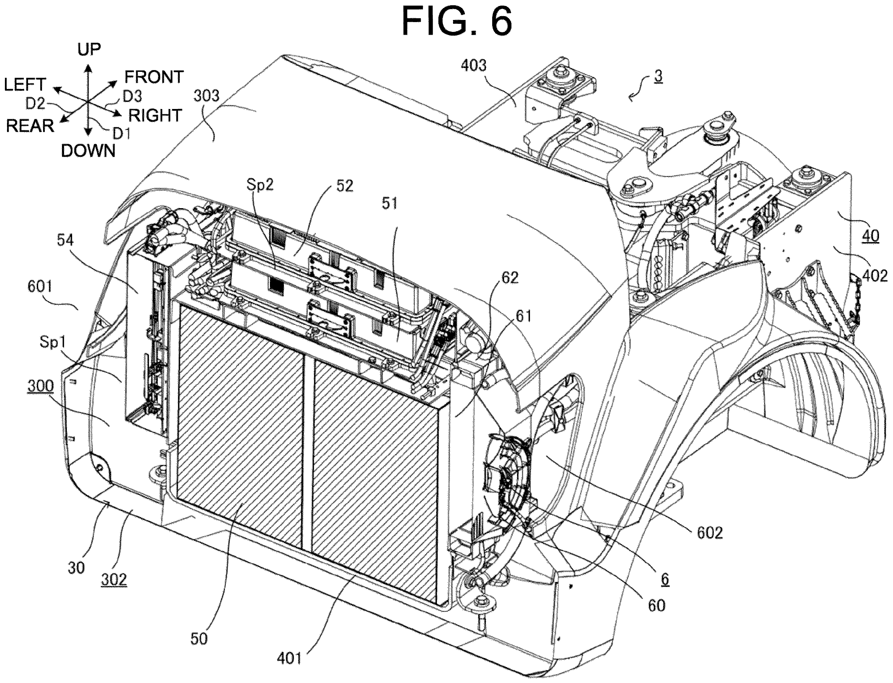

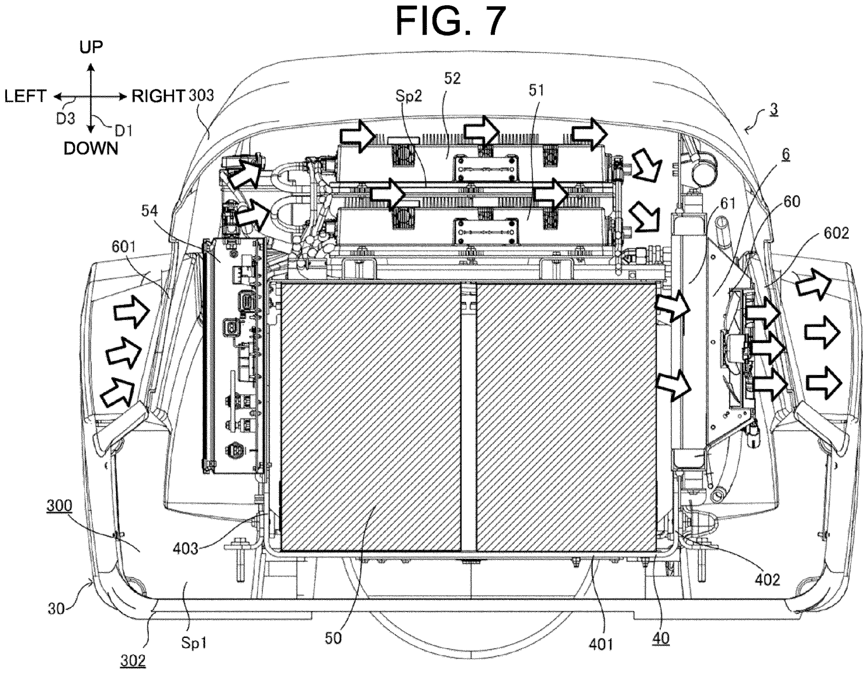

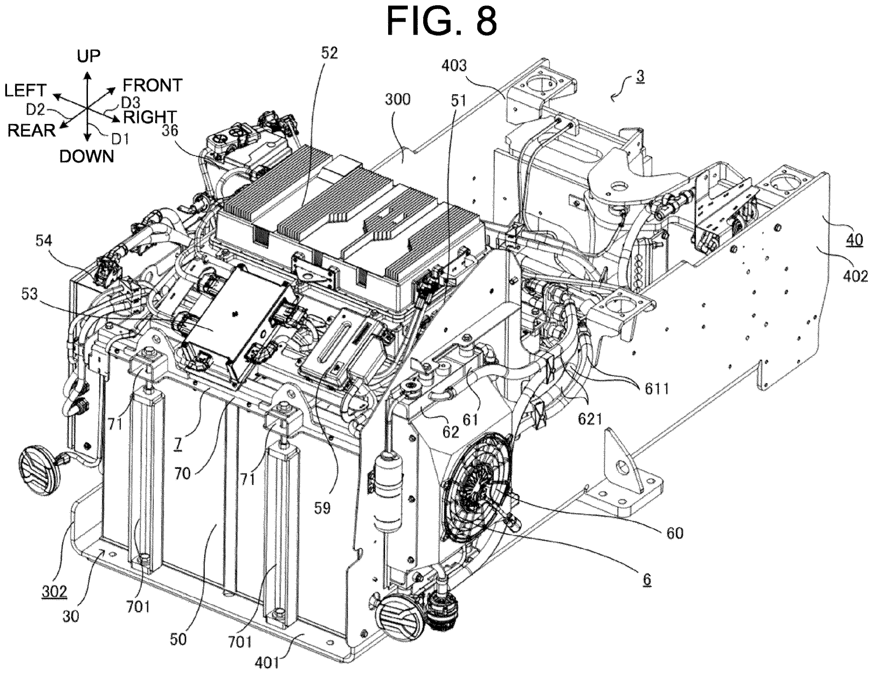

As illustrated in FIGs. 5 to 8, the work machine 3 has a machine body frame 40 constituting a framework of the machine body 30 in the rear portion 302 of the machine body 30. FIG. 5 is a schematic perspective view of the rear portion 302 of the work machine 3, in which exterior materials including the fender, the body, the hood 303, the counterweight 304, and the like are indicated by imaginary lines (two dot chain lines). FIGs. 6 and 7 are a schematic perspective view and a rear view, respectively, of the rear portion 302 of the work machine 3, taken along the line A1 to A1 in FIG. 4. FIG. 8 is a schematic perspective view of the rear portion 302 of the work machine 3, in which exterior materials including the fender, the body, the hood 303, the counterweight 304, and the like are omitted.

The machine body frame 40 includes a bottom plate 401, a right side plate 402, and a left side plate 403. The machine body frame 40 is made of, for example, metal. The bottom plate 401 is formed in a rectangular shape having a length in the front-rear direction D2 in a plan view. The right side plate 402 is a plate-shaped member rising upward from the right end edge of the bottom plate 401, and the left side plate 403 is a plate-shaped member rising upward from the left end edge of the bottom plate 401.

The devices of the drive system accommodated in the engine room 300 are directly or indirectly fixed to the machine body frame 40. Further, most of the devices of the drive system except for the power distributor 54 and the like are disposed at a position above the bottom plate 401 and between the right side plate 402 and the left side plate 403 in the left-right direction D3.

Specifically, the battery unit 50 that supplies electric power to the electric motor 41 is disposed in a region surrounded by the bottom plate 401, the right side plate 402, and the left side plate 403 in a state of being placed on the bottom plate 401 of the machine body frame 40.

Here, the work machine 3 is provided with a cooling device 6 for cooling the battery unit 50. The cooling device 6 is an air-cooling type cooling device that cools the battery unit 50 by passing an airflow between a first opening portion 601 and a second opening portion 602 formed on both sides of the engine room 300 in the left-right direction D3. Further, in the engine room 300, an electrical device (as an example, the power distributor 54) different from the battery unit 50 is disposed in an air-cooled space Sp1 cooled by the cooling device 6.

That is, the work machine 3 according to the present embodiment includes the battery unit 50, the cooling device 6, and the electrical device (as an example, the power distributor 54). The battery unit 50 supplies electric power to at least the electric motor 41, and is disposed in an air-cooled space Sp1 constituting a part of the engine room 300. The engine room 300 has the first opening portion 601 and the second opening portion 602. The cooling device 6 generates an airflow passing through the air-cooled space Sp1 at least from the first opening portion 601 toward the second opening portion 602. The electrical device (as an example, the power distributor 54) is disposed in the air-cooled space Sp1.

In the present embodiment, as an example, the first opening portion 601 is opened in the left side surface of the rear portion 302 of the machine body 30 (see FIG. 1), and the second opening portion 602 is opened in the right side surface of the rear portion 302 of the machine body 30 (see FIG. 2). Therefore, as illustrated in FIG. 7, the cooling device 6 generates an airflow passing through the air-cooled space Sp1 from the left side to the right side. In FIG. 7, the airflow is schematically indicated by white arrows.

According to this configuration, the entire air-cooled space Sp1 constituting a part of the engine room 300 can be cooled by the cooling device 6. In addition to the battery unit 50, the electrical device (for example, the power distributor 54) is disposed in the air-cooled space Sp1, and therefore, not only the battery unit 50 but also the electrical device (as an example, the power distributor 54) can be cooled by the cooling device 6. As a result, it is possible to provide the work machine 3 that can easily achieve efficient cooling of the battery unit 50 and the electrical device (as an example, the power distributor 54).

Further, the electrical device includes the power distributor 54 that distributes electric power of the battery unit 50. Therefore, it is possible to efficiently cool the power distributor 54 while disposing the power distributor 54 in the vicinity of the battery unit 50 and suppressing the power transmission loss between the battery unit 50 and the power distributor 54 to be small.

In the present embodiment, the electrical device further includes a converter 58 (see FIG. 4). The converter 58 is electrically connected to the battery unit 50 and the auxiliary battery 36, and charges the auxiliary battery 36 with the electric power from the battery unit 50. That is, the converter 58 has a step-down circuit, and steps down the output voltage of the battery unit 50 and supplies same to the auxiliary battery 36. The auxiliary battery 36 is, for example, a lead acid battery of 12V, and functions as an auxiliary machine battery that supplies electric power to the charging controller 53 and the like.

Here, the electrical device (as an example, the power distributor 54) is located between the first opening portion 601 and the battery unit 50 in a plan view in such a manner that at least a part thereof faces the first opening portion 601. That is, at least a part of the electrical device (as an example, the power distributor 54) is disposed between the first opening portion 601 and the battery unit 50 in the left-right direction D3. In the present embodiment, the first opening portion 601 is located on the left side surface of the machine body 30, and thus the power distributor 54, which is an example of the electrical device, is located to the right of the first opening portion 601 and to the left of the battery unit 50.

Accordingly, the electrical device is located on the upstream side of the battery unit 50 in the airflow, and the electrical device can be cooled by the relatively low-temperature airflow taken in from the first opening portion 601. Therefore, it is easy to suppress a rise in the temperature of the electrical device.

Further, the work machine 3 includes a machine body frame 40 that supports the battery unit 50. At least a part of the electrical device (as an example, the power distributor 54 and the converter 58) is located outside the machine body frame 40 in a plan view. In the present embodiment, the power distributor 54 and the converter 58, which are examples of the electrical device, are both fixed to a left side surface of a bracket 70 (see FIG. 8), which will be described below, and are disposed so as to protrude outward (leftward) when viewed from the left side plate 403 of the machine body frame 40.

Accordingly, the electrical device is hardly affected by the heat generated in the battery unit 50, and the electrical device can be efficiently cooled by the cooling device 6. Therefore, it is easy to suppress a rise in the temperature of the electrical device.

Further, the cooling device 6 has a fan 60. The fan 60 generates an airflow by discharging the air in the air-cooled space Sp1 to the outside of the air-cooled space Sp1 through the second opening portion 602. The fan 60 is located between the second opening portion 602 and the battery unit 50 in a plan view in such a manner that at least a part thereof faces the second opening portion 602. That is, the fan 60 of the cooling device 6 is disposed between the second opening portion 602 and the battery unit 50 in the left-right direction D3. In the present embodiment, the second opening portion 602 is located on the right side surface of the machine body 30, and thus the fan 60 is located to the left of the second opening portion 602 and to the right of the battery unit 50.

According to this configuration, the cooling device 6 generates the airflow by discharging the air in the air-cooled space Sp1 to the outside of the air-cooled space Sp1, and thus it is easy to take a large amount of outside air into the air-cooled space Sp1. As a result, the cooling efficiency of the cooling device 6 is improved.

Further, the work machine 3 further includes an electric device disposed above the battery unit 50 in the air-cooled space Sp1. The "electric device" mentioned here is a device different from the battery unit 50 and the electrical device, and is, as an example, the first charger 51 and the second charger 52. That is, in addition to the battery unit 50 and the electrical devices (as an example, the power distributor 54), the electric devices (as an example, the first charger 51 and the second charger 52) are disposed in the air-cooled space Sp1 cooled by the cooling device 6.

According to this configuration, the cooling device 6 can cool not only the battery unit 50 and the electrical devices (as an example, the power distributor 54 and the converter 58) but also the electric devices (as an example, the first charger 51 and the second charger 52).

Here, the cooling device 6 has a first radiator 61 for cooling the first heat source and a second radiator 62 for cooling the second heat source. The "first heat source" and the "second heat source" referred to in the present disclosure include various heat sources that can generate heat at least when the work machine 3 is in operation. In the present embodiment, the hydraulic oil is an example of the "first heat source", and the inverter unit 43 and the like are examples of the "second heat source". Accordingly, the cooling device 6 can collectively cool the plurality of heat sources (the first heat source and the second heat source).

Further, the cooling device 6 generates an airflow passing through the first radiator 61 and the second radiator 62 in parallel. Specifically, the first radiator 61 and the second radiator 62 are disposed between the battery unit 50 and the fan 60 in a plan view. In the present embodiment, since the fan 60 is located to the right of the battery unit 50, the first radiator 61 and the second radiator 62 are located to the right of the battery unit 50 and to the left of the fan 60.

In the present embodiment, as an example, the first radiator 61 and the second radiator 62 are arranged side by side in the front-rear direction D2. Accordingly, when the fan 60 is operated, an airflow passing through the first radiator 61 and the second radiator 62 from the battery unit 50 side (left side) to the fan 60 side (right side) is generated. Therefore, the cooling device 6 can efficiently cool both the first heat source and the second heat source.

In the present embodiment, the first radiator 61 is an oil cooler (radiator) connected to the hydraulic actuators (including the steering cylinder 313, the hydraulic cylinder 333, and the like) by a hydraulic oil pipe 611 through which hydraulic oil passes. That is, the hydraulic oil delivered from the hydraulic pump 11 is sent to the first radiator 61 through the hydraulic actuators and the hydraulic oil pipe 611. Then, the first radiator 61 cools the hydraulic oil as a first heat source, and the cooled hydraulic oil is sent to the oil tank 12 (see FIG. 4).

The second radiator 62 is thermally coupled to the second heat source by a refrigerant pipe 621 through which a refrigerant passes. Specifically, the refrigerant pipe 621 connects the first inverter unit 43, the second inverter unit 44, the first electric motor 41, and the second electric motor 42 to the second radiator 62. Accordingly, the first inverter unit 43, the second inverter unit 44, the first electric motor 41, and the second electric motor 42 as the second heat source are efficiently cooled by the refrigerant supplied through the refrigerant pipe 621.

Here, the refrigerant pipe 621 extends from the second radiator 62 along front-rear direction of the machine body 30. Therefore, it is possible to efficiently cool the second heat sources (the first inverter unit 43, the second inverter unit 44, the first electric motor, and the second electric motor 42) which are disposed at positions different from the second radiator 62 in the front-rear direction D2.

Further, the refrigerant pipe 621 is routed on one side of the machine body 30 in the left-right direction D3, and the electric power line 57 (see FIG. 4) is routed on the other side of the machine body 30 in the left-right direction D3. The electric power line 57 is, for example, a cable (electric wire) electrically connecting the power distributor 54 to the first inverter unit 43 and the second inverter unit 44. In the present embodiment, since the second radiator 62 is disposed on the right of the battery unit 50, the refrigerant pipe 621 connected to the second radiator 62 is similarly routed on the right of the battery unit 50 (the right side of the machine body 30). Therefore, the electric power line 57 is routed on the left of the battery unit 50 (the left side of the machine body 30).

Accordingly, the refrigerant pipe 621 and the electric power line 57 are separately routed in the left-right direction D3 of the machine body 30, and thus the inside of the engine room 300 is organized, and the airflow by the cooling device 6 is improved.

Furthermore, the maintainability of the refrigerant pipe 621 or the electric power line 57 is also improved.

Further, as described above, the work machine 3 according to the present embodiment includes the first charger 51 and the second charger 52 in addition to the battery unit 50 that is disposed in the engine room 300 and supplies electric power to the electric motor 41. The first charger 51 is disposed in the engine room 300 and charges the battery unit 50 with the electric power supplied from the external power supply 55. The second charger 52 is disposed in the engine room 300 and charges the battery unit 50 with the electric power supplied from the external power supply 55. In addition, the work machine 3 has, as the charging mode of the battery unit 50, the normal charging mode in which charging is performed by the first charger 51 alone and the quick charging mode in which charging is performed by the first charger 51 and the second charger 52.

That is, in the "quick charging mode" in which the battery unit 50 is charged by both the first charger 51 and the second charger 52, the charging of the battery unit 50 can be completed in a shorter time than in the "normal charging mode". Therefore, for example, when the work machine 3 is used all day, even if the battery unit 50 is charged in a short time using a lunch break or the like, it is easy to perform sufficient charging to cover work in the afternoon. As a result, it is possible to provide the work machine 3 in which efficient charging of the battery unit 50 is easily performed.

Here, the first charger 51 and the second charger 52 are located above the battery unit 50. Accordingly, the first charger 51 and the second charger 52 can be installed using a dead space above the battery unit 50, and it is easy to suppress an increase in the size of the machine body 30 due to the provision of a plurality of chargers (the first charger 51 and the second charger 52). Further, the first charger 51 and the second charger 52 can be easily disposed close to the battery unit 50, and the power transmission loss from the first charger 51 and the second charger 52 to the battery unit 50 can be suppressed to be small.

Furthermore, the first charger 51 and the second charger 52 are disposed in such a manner that at least a part thereof overlaps each other in the up-down direction D1. Accordingly, as compared with a case where the first charger 51 and the second charger 52 are arranged side by side in the front-rear direction D2 or the left-right direction D3, the area occupied by the first charger 51 and the second charger 52 in a plan view can be reduced. Therefore, it is easy to suppress an increase in the size of the machine body 30 due to the provision of the plurality of chargers (the first charger 51 and the second charger 52).

In the present embodiment, as an example, both the first charger 51 and the second charger 52 have a flat rectangular parallelepiped shape in the up-down direction D1 and are formed in the same shape. Thus, the first charger 51 and the second charger 52 are stacked so as to completely overlap each other in the up-down direction D1. Here, as an example, the first charger 51 is disposed on the lower side, and the second charger 52 is disposed on the upper side.

Further, the first charger 51 and the second charger 52 are disposed adjacent to each other. That is, the first charger 51 and the second charger 52 are disposed so as to abut against each other without interposing another device therebetween. Therefore, it is easy to suppress an increase in the size of the machine body 30 due to the provision of the plurality of chargers (the first charger 51 and the second charger 52).

Here, a clearance Sp2 (see FIG. 7) is secured between the first charger 51 and the second charger 52. Therefore, heat generated in one of the first charger 51 and the second charger 52 is less likely to be transferred to the other, and it is possible to suppress an increase in temperature of the first charger 51 and the second charger 52.

Further, the work machine 3 according to the present embodiment includes the cooling device 6 that cools the first charger 51 and the second charger 52 by passing an airflow through the clearance Sp2. That is, the clearance Sp2 between the first charger 51 and the second charger 52 forms a route (flow passage) through which the airflow generated by the cooling device 6 passes.

This makes it possible to efficiently cool the first charger 51 and the second charger 52.

In addition, the first charger 51 and the second charger 52 each have an exhaust fan on the front surface side. Each of the first charger 51 and the second charger 52 discharges heat generated therein forward by the exhaust fan. Since the heat (exhaust gas) discharged from the first charger 51 and the second charger 52 is discharged from the second opening portion 602 by the airflow generated by the cooling device 6, the temperature of the first charger 51 and the second charger 52 is unlikely to rise.

Further, the work machine 3 includes a charging controller 53 that controls the first charger 51 and the second charger 52. The charging controller 53 is located above the battery unit 50. Accordingly, the charging controller 53 can be installed by using a dead space above the battery unit 50, and it is easy to suppress an increase in size of the machine body 30 caused by controlling the plurality of chargers (the first charger 51 and the second charger 52) by the charging controller 53.

Further, the first charger 51 and the second charger 52 are located between the driving unit 32 located in front of the engine room 300 and the charging controller 53 in the front-rear direction D2. In the present embodiment, the charging controller 53 is disposed behind the first charger 51 and the second charger 52. Therefore, the first charger 51 and the second charger 52 are located behind the driving unit 32 and in front of the charging controller 53. Accordingly, the plurality of chargers (the first charger 51 and the second charger 52) and the charging controller 53 can be efficiently disposed in the engine room 300.

Further, the charging controller 53 is disposed to be inclined with respect to the horizontal plane. In the present embodiment, as an example, the charging controller 53 has a flat rectangular parallelepiped shape on in the up-down direction D1, and is disposed in a posture inclined rearward with respect to the horizontal plane in such a manner that the rear end is lower than the front end. Accordingly, the plurality of chargers (the first charger 51 and the second charger 52) and the charging controller 53 can be efficiently disposed in the engine room 300.

In the present embodiment, the battery unit 50 is configured to be attachable to and detachable from the machine body frame 40 in preparation for the maintenance (including repair, replacement, and the like) of the battery unit 50.

As illustrated in FIGs. 8 to 11, the work machine 3 according to the present embodiment includes a battery support portion 7 in addition to the battery unit 50. The battery unit 50 supplies electric power to the electric motor 41. The battery support portion 7 supports the battery unit 50 and is removably fixed to the machine body frame 40. The battery support portion 7 has an insertion portion 71 into which a jig for attaching and detaching the battery unit 50 can be inserted from one side in the front-rear direction D2.

The "jig" in the present disclosure is a tool for attaching and detaching the battery unit 50, and is a fork of a forklift as an example in the present embodiment. Further, in the present embodiment, as an example, a jig can be inserted into the insertion portion 71 from the rear side (one side) in the front-rear direction D2.

That is, in the work machine 3 according to the present embodiment, the battery unit 50 can be removed from the machine body frame 40 by removing the battery support portion 7 that supports the battery unit 50 from the machine body frame 40. Here, in a state where the jig is inserted into the insertion portion 71 of the battery support portion 7 from one side (for example, the rear side) in the front-rear direction D2, if the battery support portion 7 is removed together with the battery unit 50 by the jig, even when the battery unit 50 is heavy, the battery unit 50 can be removed. As a result, it is possible to provide the work machine 3 capable of improving the maintainability of the battery unit 50.

More specifically, the battery support portion 7 has a bracket 70. The bracket 70 is fixed to the upper surface of the battery unit 50 and can be coupled to the machine body frame 40. The insertion portion 71 penetrates through the bracket 70 along the front-rear direction D2. That is, the battery unit 50 is removably fixed to the machine body frame 40 by the bracket 70 fixed to the upper surface of the battery unit 50. A hole formed in the bracket 70 so as to penetrate through the bracket 70 along the front-rear direction D2 functions as the insertion portion 71 into which the jig can be inserted from one side (the rear side in the present embodiment) of the front-rear direction D2.

Accordingly, the insertion portion 71 is disposed on the upper surface side of the battery unit 50, and thus the insertion portion 71 is located at a height at which the insertion portion 71 is easily visible, and the work of inserting the jig into the insertion portion 71 is facilitated. The bracket 70 is made of, for example, metal, and has sufficient strength to support the battery unit 50.

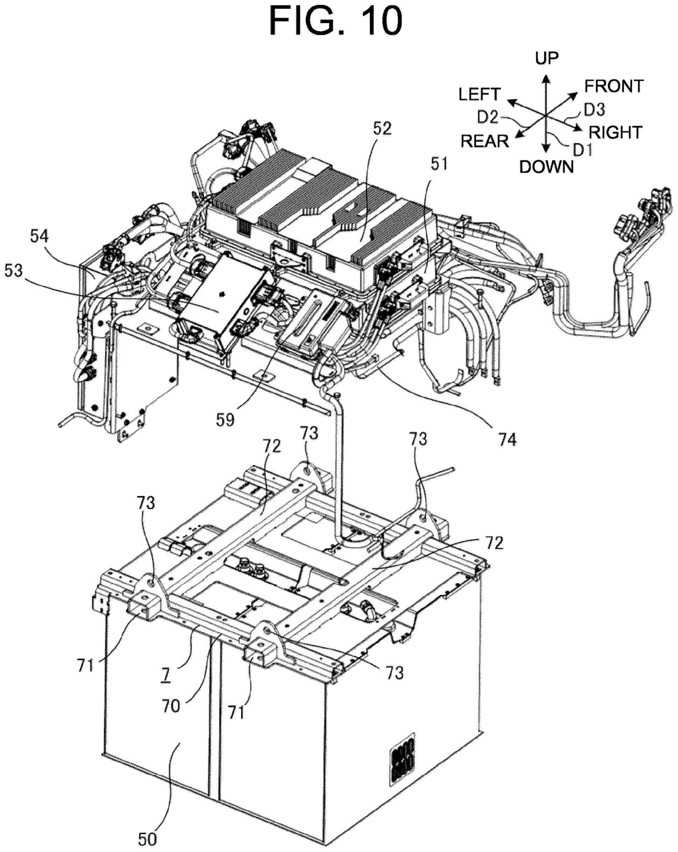

Specifically, in the present embodiment, as illustrated in FIG. 10, the bracket 70 has a pair of reinforcing frames 72 each having a length in the front-rear direction D2. The pair of reinforcing frames 72 are spaced apart from each other in the left-right direction D3. Each of the reinforcing frames 72 has a square tubular shape, and an inner space thereof constitutes the insertion portion 71. That is, in the present embodiment, the bracket 70 has a pair of insertion portions 71 spaced apart from each other in the left-right direction D3.

In short, the bracket 70 includes a pair of reinforcing frames 72 each having a length in the front-rear direction D2 and arranged in the left-right direction D3. The insertion portion 71 opens in an end surface on one side (the rear side in the present embodiment) of the pair of reinforcing frames 72 in the front-rear direction D2. Therefore, it is easy to secure sufficient strength for supporting the battery unit 50 in the insertion portion 71.

Further, the bracket 70 has a hanging portion 73 used when the battery unit 50 is hung by a crane or the like. A plurality of (for example, four) hanging portions 73 are provided, and these hanging portions 73 have sufficient strength to support the battery unit 50. In the present embodiment, as an example, the hanging portion 73 is provided at each of both end portions of each reinforcing frame 72 in the front-rear direction D2.

The bracket 70 further includes a device support portion 74 (see FIG. 10). The device support portion 74 supports a device associated with the battery unit 50. In the present embodiment, the first charger 51, the second charger 52, the charging controller 53, and the battery controller 59 are supported by the device support portion 74 as an example of a device (associated with the battery unit 50). The battery controller 59 is a device that controls the battery unit 50, such as managing the remaining capacity of the battery unit 50. The battery controller 59 is disposed on the right of the charging controller 53 so as to be aligned with the charging controller 53 in a plan view.

According to this configuration, the devices associated with the battery unit 50 can be handled integrally with the battery unit 50. Therefore, by attaching/detaching the battery unit 50 to/from the machine body 30, devices associated with the battery unit 50 can also be attached/detached to/from the machine body 30.

Specifically, the device support portion 74 is fixed on the pair of reinforcing frames 72. The device support portion 74 is disposed at a position separated upward from the upper surfaces of the pair of reinforcing frames 72, and the first charger 51 is fixed to the lower surface side of the device support portion 74. The second charger 52, the charging controller 53, and the battery controller 59 are fixed to the upper surface side of the device support portion 74. Here, a portion (rear end portion) of the device support portion 74 in which the charging controller 53 and the battery controller 59 are disposed is disposed in a posture inclined rearward with respect to the horizontal plane in such a manner that the rear end is lower than the front end. Accordingly, the charging controller 53 and the battery controller 59 are disposed to be inclined with respect to the horizontal plane.

Further, as described above, the work machine 3 according to the present embodiment includes the converter 58 that converts the electric power supplied from the battery unit 50, and the auxiliary battery 36 that is charged with the electric power converted by the converter 58. The converter 58 and the auxiliary battery 36 are disposed in such a manner that at least a part thereof faces each other in the up-down direction D1 (see FIG. 4).

In the present embodiment, the converter 58 is disposed below the auxiliary battery 36, and a part of the converter 58 faces the auxiliary battery 36 in the up-down direction D1. According to this configuration, in a plan view, the area occupied by the converter 58 and the auxiliary battery 36 can be reduced, and the converter 58 and the auxiliary battery 36 can be efficiently disposed in the engine room 300.

Further, at least a part of the converter 58 is located outside the machine body frame 40 in a plan view. In the present embodiment, the converter 58 and the auxiliary battery 36 are fixed to the left side surface of the bracket 70. Therefore, at least a part of the converter 58 protrudes outward (leftward) of the machine body frame 40 from the left side plate 403 of the machine body frame 40. According to this configuration, the converter 58 can be efficiently disposed in the engine room 300.

Further, at least a part of the auxiliary battery 36 is located at a position overlapping the battery unit 50 in a plan view (see FIG. 4).

In the present embodiment, the auxiliary battery 36 is disposed above the battery unit 50, and a part of the auxiliary battery 36 overlaps the battery unit 50 in the up-down direction D1. According to this configuration, in a plan view, the area occupied by the auxiliary battery 36 and the battery unit 50 can be kept small, and the auxiliary battery 36 and the battery unit 50 can be efficiently disposed in the engine room 300.

Further, the battery support portion 7 further includes a first support member 701 and a second support member 702. The first support member 701 connects one end portion of the bracket 70 in the front-rear direction D2 to the machine body frame 40. The second support member 702 connects the other end portion of the bracket 70 in the front-rear direction D2 to the machine body frame 40. In the present embodiment, a pair of first support members 701 are provided behind the battery unit 50, and the rear end portion (an example of one end portion in the front-rear direction D2) of the bracket 70 is connected to the machine body frame 40 by the pair of first support members 701. On the other hand, a pair of second support members 702 are provided in front of the battery unit 50, and the front end portion (an example of the other end portion in the front-rear direction D2) of the bracket 70 is connected to the machine body frame 40 by the pair of second support members 702.

According to this configuration, since both end portions of the bracket 70 in the front-rear direction D2 are connected to the machine body frame 40 by the first support member 701 and the second support member 702, the battery unit 50 can be firmly fixed to the machine body frame 40.

Here, the work machine 3 according to the present embodiment includes the counterweight 304 (see FIG. 5) as described above. The counterweight 304 is disposed on one side (the rear side in the present embodiment) of the battery support portion 7 in the front-rear direction D2. Here, the first support member 701 is located between the battery unit 50 and the counterweight 304 in the front-rear direction D2. In the present embodiment, since the counterweight 304 is located at the rear end portion of the machine body 30, the first support member 701 is located behind the battery unit 50 and in front of the counterweight 304.

Accordingly, the first support member 701 can be easily accessed by removing the counterweight 304 from the machine body 30. That is, the first support member 701 can be attached to and detached from the machine body frame 40 in a state where the counterweight 304 is removed from the machine body 30.

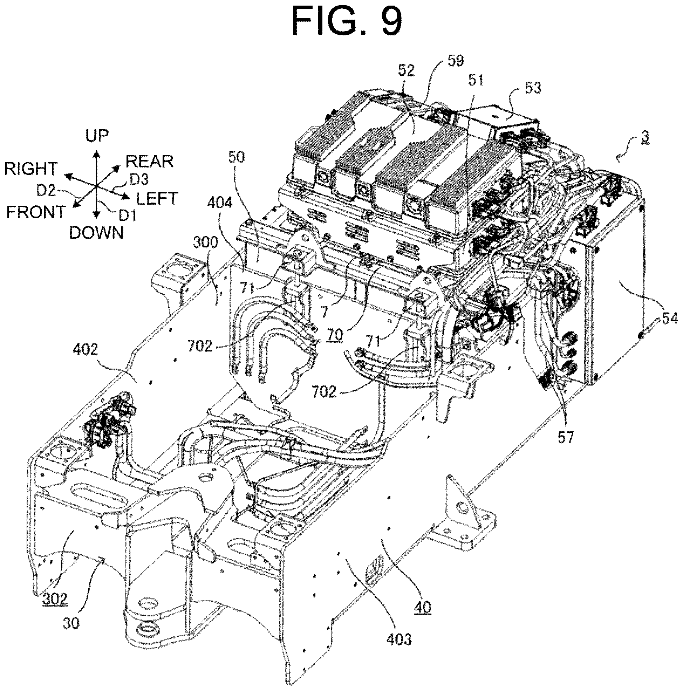

Further, the machine body frame 40 has a partition wall 404 (see FIG. 9). The partition wall 404 is a member that partitions the space (engine room 300) in the front-rear direction D2. The battery unit 50 is located between the partition wall 404 and the first support member 701. In the present embodiment, the battery unit 50 is located at the rear end portion of the machine body 30, and thus the battery unit 50 is located behind the partition wall 404 and in front of the first support member 701.

Accordingly, since the battery unit 50 is disposed in one of the spaces partitioned by the partition wall 404 in the engine room 300, a device other than the battery unit 50 can be accommodated in the other space. Therefore, the battery unit 50 and other devices can be efficiently disposed in the engine room 300.

Further, the partition wall 404 is located between the second support member 702 and the battery unit 50.

In the present embodiment, the battery unit 50 is located at the rear end portion of the machine body 30, and thus the partition wall 404 is located behind the second support member 702 and in front of the battery unit 50. In particular, in the present embodiment, the second support member 702 is fixed to a surface (rear surface) of the partition wall 404 on a side opposite to the battery unit 50 by means such as welding.

Accordingly, since the second support member 702 and the battery unit 50 are partitioned by the partition wall 404, it is easy to attach and detach the bracket 70 to and from the machine body frame 40 by the second support member 702.

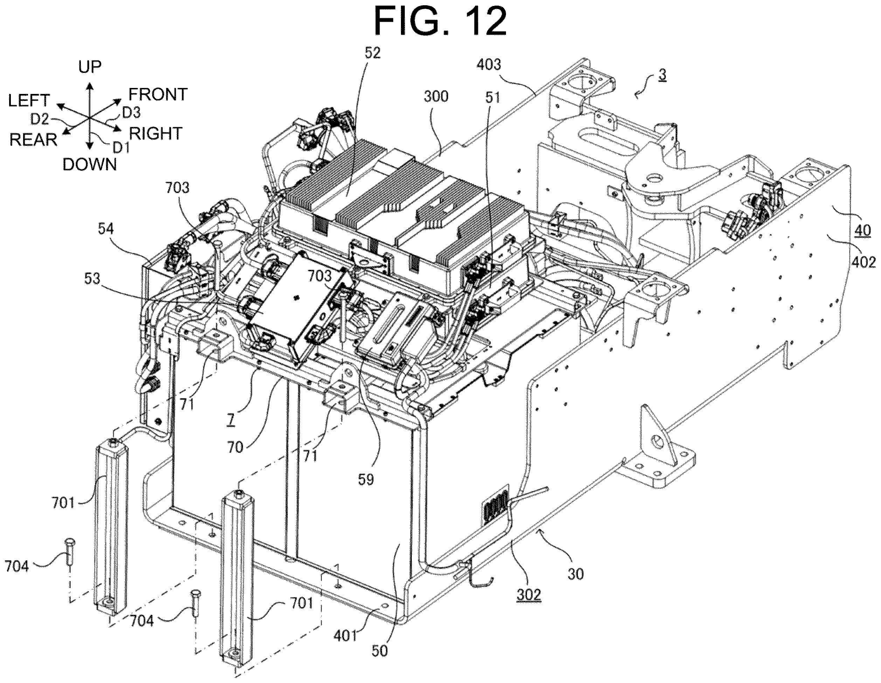

In the work machine 3 configured as described above, the battery unit 50 can be removed from the machine body frame 40 in the procedure illustrated in FIGs. 12 to 15.

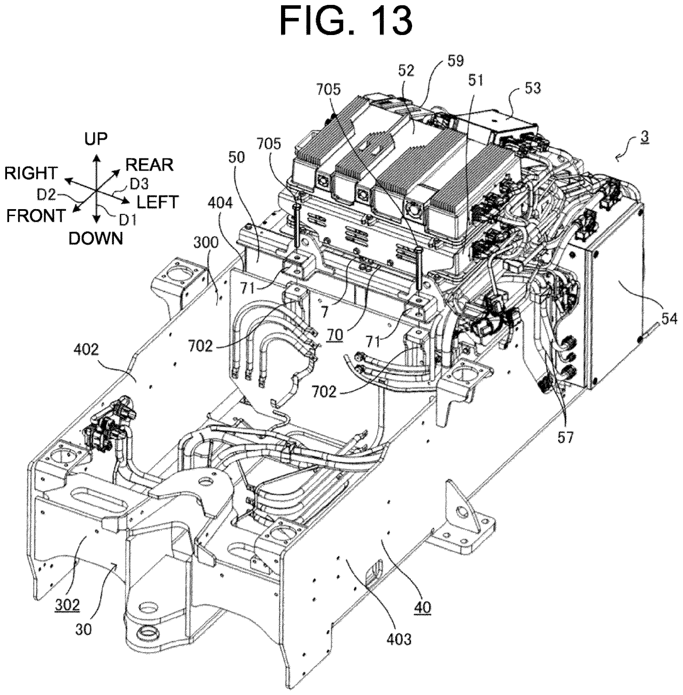

That is, first, in a state where the hood 303 is opened and the counterweight 304 is removed, as illustrated in FIGs. 12 and 13, the first support member 701 and the second support member 702 are removed from the bracket 70. The first support member 701 is fixed to the front end portion of the reinforcing frame 72 by a fastener 703 (bolt), and the second support member 702 is fixed to the rear end portion of the reinforcing frame 72 by a fastener 705 (bolt). Therefore, the first support member 701 and the second support member 702 are removed from the bracket 70 by removing the fasteners 703 and 705.

Further, the first support member 701 is also removed from the bottom plate 401 of the machine body frame 40. The first support member 701 is fixed to the machine body frame 40 by a fastener 704 (bolt). Therefore, the first support member 701 is removed from the machine body frame 40 by removing the fastener 704.

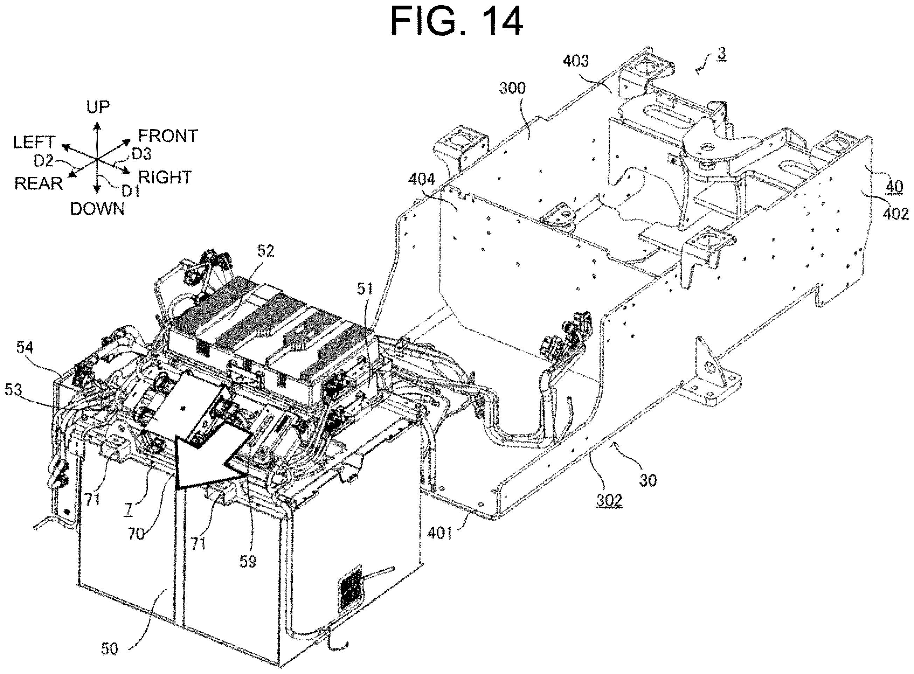

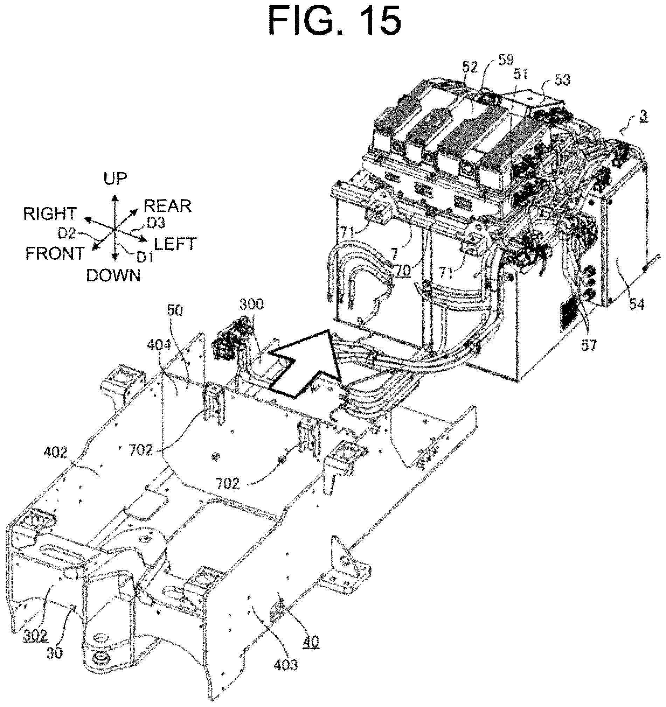

Then, in a state where the first support member 701 is removed, a jig (a fork of a forklift in the present embodiment) is inserted into the pair of insertion portions 71 from the rear. Further, as illustrated in FIGs. 14 and 15, the battery unit 50 can be removed from the machine body 30 (machine body frame 40) by pulling out the battery support portion 7 rearward together with the battery unit 50 in a state where the battery support portion 7 is lifted slightly upward together with the battery unit 50 by the jig.

When the battery unit 50 is attached to the machine body 30, the battery unit 50 is attached in a procedure reverse to the above.

In the present embodiment, the engine room 300 is divided into two parts in the front-rear direction D2 by the partition wall 404, the battery unit 50 and the like are disposed in a rear space behind the partition wall 404, and the electric motor 41 and the like are disposed in a front space in front of the partition wall 404. Specifically, the (first) electric motor 41, the second electric motor 42 (integrated with the hydraulic pump 11), the (first) inverter unit 43, the second inverter unit 44, the power transmission mechanism 35, the oil tank 12, and the like are disposed in the front space in front of the partition wall 404.

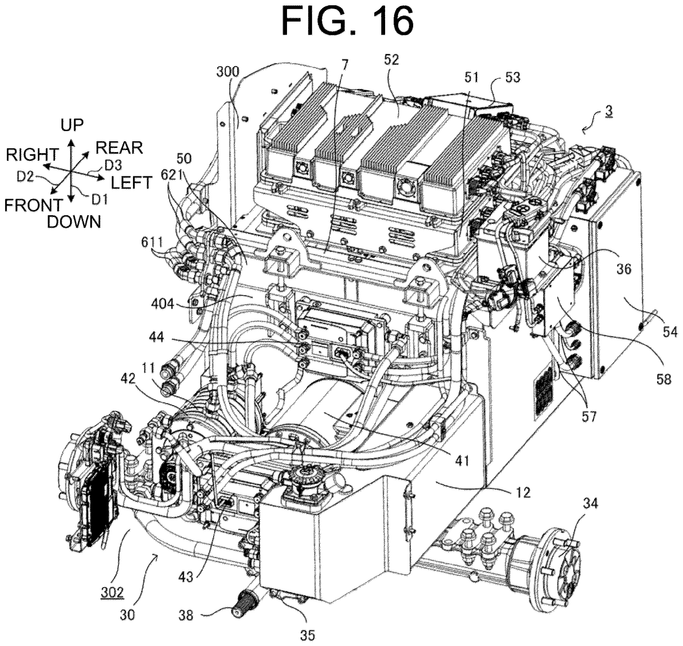

Hereinafter, the arrangement of the electric motor 41 and the like in the front space in front of the partition wall 404 will be described in detail with reference to FIGs. 16 to 20.

In this type of work machine 3, depending on the arrangement of the electric motor 41 and the inverter unit 43, for example, it may be difficult to route a cable that connects the electric motor 41 and the inverter unit 43, or miniaturization of the work machine 3 may be hindered. The work machine 3 according to the present embodiment implements, by the configuration described below, the work machine 3 in which appropriate arrangement of the electric motor 41 and the inverter unit 43 is easily achieved.

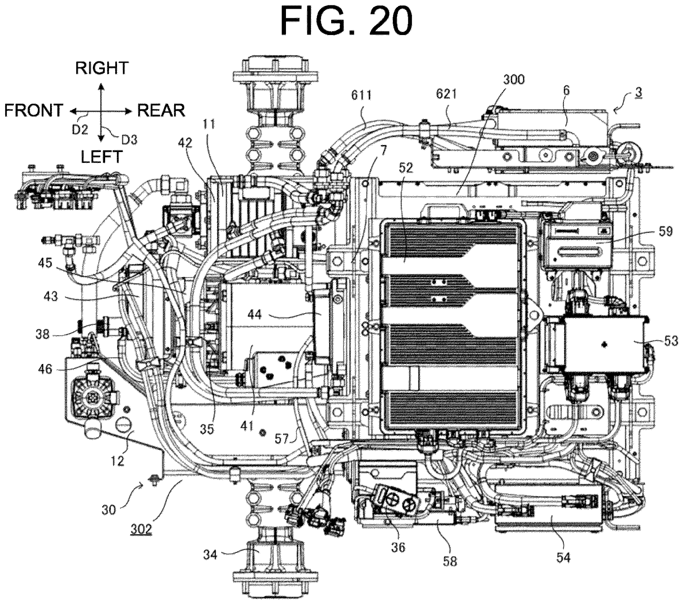

That is, the work machine 3 according to the present embodiment includes the machine body frame 40, the electric motor 41, the inverter unit 43, and the power transmission mechanism 35. The axle 34 is mounted on the machine body frame 40. The electric motor 41 generates power for driving the axle 34. The inverter unit 43 drives the electric motor 41 by the electric power supplied from the battery unit 50. The power transmission mechanism 35 transmits power generated by the electric motor 41 to the axle 34. At least a part of the power transmission mechanism 35 is located between the electric motor 41 and the inverter unit 43 in a plan view (see FIG. 20).

According to this configuration, at least a part of the power transmission mechanism 35 that transmits power generated by the electric motor (first electric motor) 41 to the axle (rear axle) 34 is disposed between the electric motor 41 and the inverter unit (first inverter unit) 43 in a plan view. Therefore, the space in the engine room 300 can be effectively utilized by efficiently disposing the electric motor 41 mechanically coupled to the axle 34 via the power transmission mechanism 35 and the inverter unit 43 for driving the electric motor 41. As a result, it is possible to provide the work machine 3 in which appropriate arrangement of the electric motor 41 and the inverter unit 43 is easily achieved.

Here, the electric motor 41 is located in front of the battery unit 50. Therefore, heavy objects such as the battery unit 50 and the electric motor 41 can be disposed at relatively low positions, and the center of gravity of the work machine 3 can be lowered to improve the stability.

Further, the electric motor 41 is located above the axle 34. Accordingly, the area occupied by the electric motor 41 and the axle 34 in a plan view can be reduced as compared with a case where the electric motor 41 and the axle 34 are arranged side by side.

The power transmission mechanism 35 is located in front of the electric motor 41. Therefore, the power generated by the electric motor 41 can be directly transmitted to the power transmission mechanism 35, and the transmission loss of the power from the electric motor 41 to the power transmission mechanism 35 can be suppressed to be small.

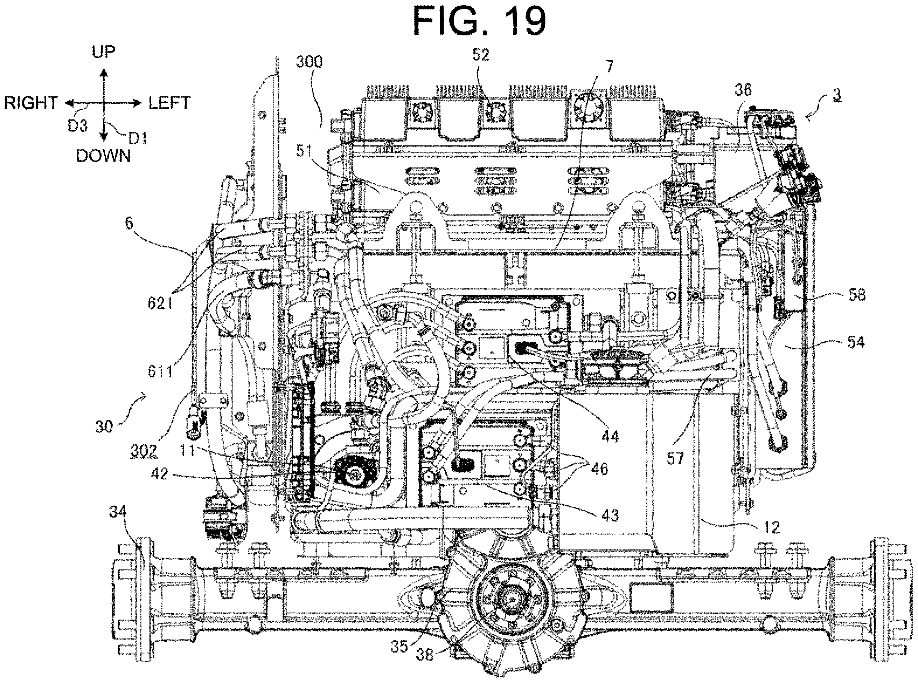

Further, the electric motor 41 is located at the central portion of the machine body frame 40 in the left-right direction D3 (see FIG. 20). Moreover, the inverter unit 43 is disproportionately disposed on one side in the left-right direction D3 with respect to the electric motor 41 in a plan view (see FIG. 19). In the present embodiment, as an example, the inverter unit 43 is disproportionately disposed on the right with respect to the electric motor 41. Therefore, the devices for driving the axle 34, such as the electric motor 41 and the power transmission mechanism 35, can be disposed at the central portion in the left-right direction D3, and the inverter unit 43 can be efficiently disposed while efficiently driving the axle 34.

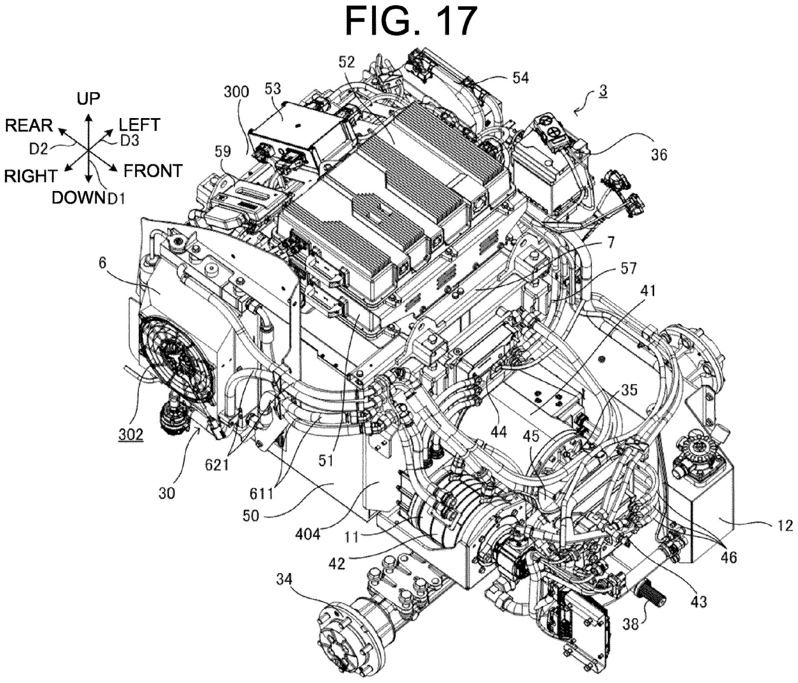

Further, the inverter unit 43 is attached to the power transmission mechanism 35 via an attachment member 45 (see FIG. 17). The attachment member 45 is, for example, a metal stay (attachment fitting), and the inverter unit 43 can be attached to the attachment member 45 by using a fastener such as a bolt. Thus, the inverter unit 43 can be supported inside the engine room 300.

Further, the power transmission mechanism 35 is hydraulic. The oil tank 12 storing oil to be supplied to the power transmission mechanism 35 is disproportionately disposed on one side in the left-right direction D3 with respect to the electric motor 41 in a plan view. In the present embodiment, as an example, the power transmission mechanism 35 is a hydro static transmission (HST) that applies pressure energy (static pressure) to oil to serve as means for power transmission. Moreover, the oil tank 12 is disproportionately disposed on the left with respect to the electric motor 41. That is, the oil tank 12 is disproportionately disposed on the opposite side of the inverter unit 43 in the left-right direction D3 with respect to the electric motor 41. Accordingly, the oil tank 12 can also be efficiently disposed in the engine room 300.

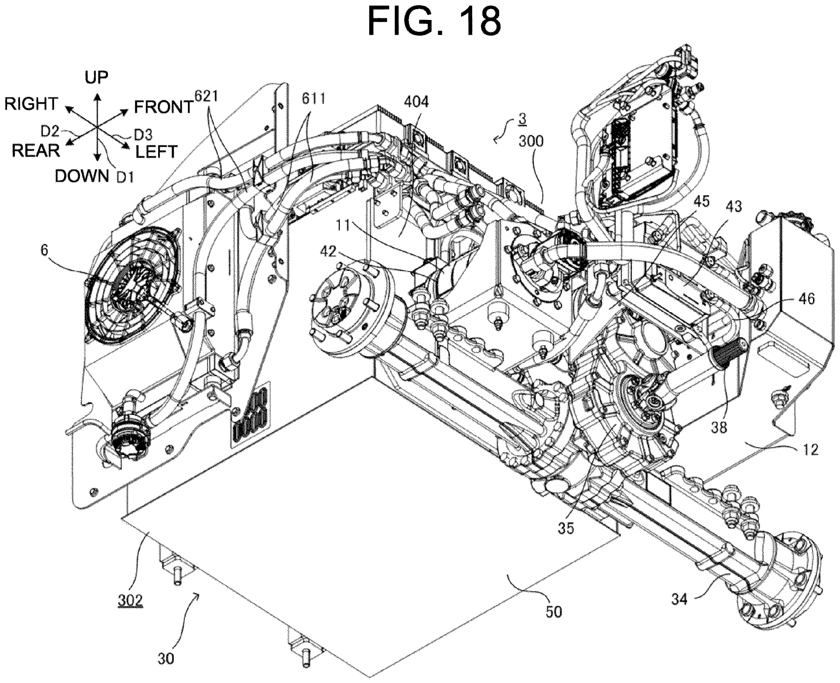

Further, as illustrated in FIG. 18, a first cable 46 electrically connecting the inverter unit 43 and the electric motor 41 is routed on a side of the power transmission mechanism 35. In the present embodiment, as an example, three first cables 46 are routed on the left side of the power transmission mechanism 35. Accordingly, the first cable 46 connecting the inverter unit 43 and the electric motor 41 can be efficiently routed in the engine room 300.

Here, the power transmission mechanism 35 is hydraulic, and the first cable 46 is routed between the power transmission mechanism 35 and the oil tank 12 storing oil to be supplied to the power transmission mechanism 35. In the present embodiment, as an example, the oil tank 12 is located to the left of the power transmission mechanism 35, and thus the first cable 46 is located to the right of the oil tank 12 and to the left of the power transmission mechanism 35. Accordingly, the first cable 46 connecting the inverter unit 43 and the electric motor 41 can be efficiently routed in the engine room 300.

Further, as illustrated in FIG. 19, the electric power line 57 electrically connecting the inverter unit 43 and the battery unit 50 is routed through the upper side of the oil tank 12. In the present embodiment, the electric power line 57 is a cable connecting the power distributor 54 that distributes electric power from the battery unit 50 and the inverter unit 43. Accordingly, the electric power line 57 connecting the inverter unit 43 and the battery unit 50 can be efficiently routed in the engine room 300.

Further, at least a part of the electric power line 57 is held by the machine body frame 40. In the present embodiment, as an example, the electric power line 57 is held on the left side plate 403 of the machine body frame 40 by a clamp. This makes it easy to prevent the electric power line 57 from being caught in a movable portion of the machine body 30.

Further, as described above, the work machine 3 according to the present embodiment includes the second electric motor 42 in addition to the first electric motor 41. That is, the work machine 3 includes the machine body frame 40, the first electric motor 41, the second electric motor 42, and the oil tank 12. The axle 34 is mounted on the machine body frame 40. The first electric motor 41 generates power for driving the axle 34. The second electric motor 42 drives the hydraulic pump 11 that feeds hydraulic oil to hydraulic actuators (including the steering cylinder 313, the hydraulic cylinder 333 of the working unit 33, and the like). The oil tank 12 stores hydraulic oil. The first electric motor 41 is located between the second electric motor 42 and the oil tank 12 in a plan view.

According to this configuration, as compared with a case where one electric motor is used to drive the axle 34 and the working unit 33, for example, a problem that the driving force of the working unit 33 is insufficient when the traveling load increases or the driving force of the axle 34 is insufficient when the load of the working unit 33 increases is less likely to occur. Moreover, since the first electric motor 41 is located between the second electric motor 42 and the oil tank 12 in a plan view, in the work machine 3, it is possible to efficiently dispose the first electric motor 41 and the second electric motor 42 while including the first electric motor 41 and the second electric motor 42.

Here, the hydraulic actuators include the steering cylinder 313 for steering. Thus, the first electric motor 41 for driving the axle 34 and the second electric motor 42 for steering are separated from each other, and thus, for example, a problem that the driving force of the axle 34 is insufficient during steering is less likely to occur.

Further, as described above, the work machine 3 according to the present embodiment includes the battery unit 50 that supplies electric power to the first electric motor 41 and the second electric motor 42. Furthermore, the first electric motor 41 is located in front of the battery unit 50. Therefore, heavy objects such as the battery unit 50 and the first electric motor 41 can be disposed at relatively low positions, and the center of gravity of the work machine 3 can be lowered to improve the stability.

Further, as described above, the work machine 3 according to the present embodiment includes the first inverter unit 43 that drives the first electric motor 41 and the second inverter unit 44 that drives the second electric motor 42. Furthermore, the first inverter unit 43 and the second inverter unit and 44 are disposed at different positions in the up-down direction D1. That is, the first inverter unit 43 and the second inverter unit 44 are installed at different heights. In the present embodiment, as an example, the first inverter unit 43 is disposed at a position lower than the second inverter unit 44 (see FIG. 19). Thus, the first inverter unit 43 and the second inverter unit 44 for individually driving the first electric motor 41 and the second electric motor 42 can be efficiently disposed.

Further, the work machine 3 according to the present embodiment includes the partition wall 404 as described above. The partition wall 404 partitions, in the front-rear direction D2, a front space in which the first electric motor 41, the second electric motor 42, the first inverter unit 43, and the second inverter unit 44 are disposed from a rear space behind the front space. Therefore, at least the first electric motor 41, the second electric motor 42, the first inverter unit 43, and the second inverter unit 44 are disposed in the same space (front space), and the first inverter unit 43 and the second inverter unit 44 can be efficiently disposed.

The second inverter unit 44 is supported by the partition wall 404. In the present embodiment, as an example, the second inverter unit 44 is fixed to a central portion of the front surface of the partition wall 404 in the left-right direction D3. Accordingly, the second inverter unit 44 can be supported inside the engine room 300.

Further, the second inverter unit 44 is located above the first electric motor 41. Therefore, the second inverter unit 44 and the first electric motor 41 can be efficiently disposed.

The second inverter unit 44 is located between the oil tank 12 and the second electric motor 42 in a plan view. In the present embodiment, the oil tank 12 is located to the left of the first electric motor 41, and the second electric motor 42 is located to the right of the first electric motor 41. Therefore, the second inverter unit 44 is located to the right of the oil tank 12 and to the left of the second electric motor 42. Accordingly, the second inverter unit 44, the oil tank 12, and the second electric motor 42 can be efficiently disposed.

Further, the first inverter unit 43 is located in front of the first electric motor 41. Accordingly, the first inverter unit 43 and the first electric motor 41 can be efficiently disposed.

### [4] Variations

Hereinafter, variations of the first embodiment will be listed. The variations described below can be applied in appropriate combination.

The power source of the work machine 3 is not limited to only the electric motor 41, and may be, for example, a hybrid power source including the electric motor 41 and a diesel engine or another engine.

Further, the arrangement of the devices of the drive system accommodated in the engine room 300 can be appropriately changed. As an example, the positions of the first inverter unit 43 and the second inverter unit 44 may be switched.

Further, it is not an essential configuration that the electrical device (as an example, the power distributor 54) is disposed in the air-cooled space Sp1. In the first place, the air-cooled space Sp1 may not be provided in the engine room 300.

Further, it is not an essential that the work machine 3 has, as the charging mode of the battery unit 50, the normal charging mode in which charging is performed by the first charger 51 alone and the quick charging mode in which charging is performed by the first charger 51 and the second charger 52. In the first place, it is not essential for the work machine 3 to include the first charger 51 and the second charger 52.

Further, it is not an essential that the battery support portion 7 has the insertion portion 71 into which a jig for attaching and detaching the battery unit 50 can be inserted from one side in the front-rear direction D2. In the first place, it is not essential that the battery unit 50 is removable from the machine body frame 40 in the work machine 3.

Further, it is not essential that least a part of the power transmission mechanism 35 is located between the electric motor 41 and the inverter unit 43 in a plan view.

Further, it is not essential that the first electric motor 41 is located between the second electric motor 42 and the oil tank 12 in a plan view. In the first place, it is not essential to provide separate electric motors (the first electric motor 41 and the second electric motor 42) for driving the axle 34 and the working unit 33 in the work machine 3.

### [Supplementary Notes of the Invention]

Hereinafter, the summary of the invention extracted from the above-described embodiments will be additionally described. Note that the configurations and processing functions described in the following supplementary notes can be selected and arbitrarily combined.

### <Supplementary Note 1>

A work machine comprising:
a battery unit that supplies electric power to an electric motor; and
a battery support portion that supports the battery unit and is removably fixed to a machine body frame,
wherein the battery support portion has an insertion portion into which a jig for attaching and detaching the battery unit can be inserted from one side in a front-rear direction.

### <Supplementary Note 2>

The work machine according to Supplementary Note 1, wherein the battery support portion is fixed to an upper surface of the battery unit and has a bracket that can be coupled to the machine body frame, and the insertion portion penetrates the bracket along the front-rear direction.

### <Supplementary Note 3>

The work machine according to Supplementary Note 2, the battery support portion further comprising:
a first support member that connects one end portion of the bracket in the front-rear direction to the machine body frame; and
a second support member that connects an other end portion of the bracket in the front-rear direction to the machine body frame.

### <Supplementary Note 4>

The work machine according to Supplementary Note 3, further comprising a counterweight disposed on the one side of the battery support portion in the front-rear direction, wherein the first support member is located between the battery unit and the counterweight in the front-rear direction.

### <Supplementary Note 5>

The work machine according to Supplementary Note 3 or 4, wherein the machine body frame has a partition wall that divides a space in the front-rear direction, and the battery unit is located between the partition wall and the first support member.

### <Supplementary Note 6>

The work machine according to Supplementary Note 2 or 3, wherein the bracket has a device support portion that supports a device associated with the battery unit.

### <Supplementary Note 7>

The work machine according to Supplementary Note 2 or 3, wherein the bracket has a pair of reinforcing frames each having a length in the front-rear direction and aligned in a left-right direction, and the insertion portion includes a pair of opening portions provided at end portions on the one side of the pair of reinforcing frames in the front-rear direction.

### <Supplementary Note 8>

The work machine according to Supplementary Note 1 or 3, comprising:
a converter that converts the electric power supplied from the battery unit; and
an auxiliary battery that charges the electric power converted by the converter,
wherein the converter and the auxiliary battery are disposed in such a manner that at least a part thereof faces each other in an up-down direction.

### <Supplementary Note 9>

The work machine according to Supplementary Note 1, comprising:
the battery unit disposed in an engine room;
a first charger that is disposed in the engine room and charges the battery unit with electric power supplied from an external power supply; and
a second charger that is disposed in the engine room and charges the battery unit with electric power supplied from the external power supply,
wherein the work machine has, as a charging mode of the battery unit, a normal charging mode in which the battery unit is charged by the first charger alone and a quick charging mode in which the battery unit is charged by the first charger and the second charger.

### <Supplementary Note 10>

The work machine according to Supplementary Note 9, wherein the first charger and the second charger are located above the battery unit.

### <Supplementary Note 11>

The work machine according to Supplementary Note 9 or 10, wherein the first charger and the second charger are disposed in such a manner that at least a part thereof overlaps each other in an up-down direction.

### <Supplementary Note 12>

The work machine according to Supplementary Note 9 or 10, wherein the first charger and the second charger are disposed adjacent to each other.

### <Supplementary Note 13>

The work machine according to Supplementary Note 9 or 10, further comprising a charging controller that controls the first charger and the second charger, wherein the charging controller is located above the battery unit.

### <Supplementary Note 14>

The work machine according to Supplementary Note 1, comprising:
the battery unit that supplies electric power to at least the electric motor and is disposed in an air-cooled space constituting a part of an engine room having a first opening portion and a second opening portion;
a cooling device that generates an airflow passing through the air-cooled space from at least the first opening portion toward the second opening portion; and
an electrical device disposed in the air-cooled space.

### <Supplementary Note 15>

The work machine according to Supplementary Note 14, wherein the electrical device is located between the first opening portion and the battery unit in a plan view in such a manner that at least a part thereof faces the first opening portion.

### <Supplementary Note 16>

The work machine according to Supplementary Note 1 or 15, further comprising a machine body frame that supports the battery unit, wherein at least a part of the electrical device is located outside the machine body frame in a plan view.

### <Supplementary Note 17>

The work machine according to Supplementary Note 1 or 15,
wherein the cooling device has a fan that generates the airflow by discharging air in the air-cooled space from the second opening portion to an outside of the air-cooled space, and the fan is located between the second opening portion and the battery unit in a plan view in such a manner that at least a part thereof faces the second opening portion.

### <Supplementary Note 18>

The work machine according to Supplementary Note 1 or 15, further comprising an electric device disposed above the battery unit in the air-cooled space.

### <Supplementary Note 19>

The work machine according to Supplementary Note 1 or 15, wherein the electrical device includes a power distributor that distributes electric power of the battery unit.

### <Supplementary Note 20>

The work machine according to Supplementary Note 1 or 15, wherein the cooling device has a first radiator for cooling a first heat source and a second radiator for cooling a second heat source.

### REFERENCE SIGNS LIST

3 work machine
6 cooling device
7 battery support portion
32 driving unit
36 auxiliary battery
40 machine body frame
41 (first) electric motor
43 inverter unit (second heat source)
50 battery unit
51 first charger (electric device)
52 second charger (electric device)
53 charging controller
54 power distributor (electrical device)
55 external power supply
57 electric power line
58 converter (electrical device)
60 fan
61 first radiator
62 second radiator
70 bracket
71 insertion portion
72 reinforcing frame
74 device support portion
300 engine room
304 counterweight
404 partition wall
601 first opening portion
602 second opening portion
621 refrigerant pipe
701 first support member
702 second support member
D1 up-down direction
D2 front-rear direction
D3 left-right direction
Sp1 air-cooled space
Sp2 clearance

## Claims

1. A work machine comprising:
a battery unit that supplies electric power to an electric motor; and
a battery support portion that supports the battery unit and is removably fixed to a machine body frame,
wherein the battery support portion has an insertion portion into which a jig for attaching and detaching the battery unit can be inserted from one side in a front-rear direction.

2. The work machine according to claim 1, wherein the battery support portion is fixed to an upper surface of the battery unit and has a bracket that can be coupled to the machine body frame, and the insertion portion penetrates the bracket along the front-rear direction.

3. The work machine according to claim 2, the battery support portion further comprising:
a first support member that connects one end portion of the bracket in the front-rear direction to the machine body frame; and
a second support member that connects an other end portion of the bracket in the front-rear direction to the machine body frame.

4. The work machine according to claim 3, further comprising a counterweight disposed on the one side of the battery support portion in the front-rear direction, wherein the first support member is located between the battery unit and the counterweight in the front-rear direction.

5. The work machine according to claim 3 or 4, wherein the machine body frame has a partition wall that divides a space in the front-rear direction, and the battery unit is located between the partition wall and the first support member.

6. The work machine according to claim 2 or 3, wherein the bracket has a device support portion that supports a device associated with the battery unit.

7. The work machine according to claim 2 or 3, wherein the bracket has a pair of reinforcing frames each having a length in the front-rear direction and aligned in a left-right direction, and the insertion portion includes a pair of opening portions provided at end portions on the one side of the pair of reinforcing frames in the front-rear direction.

8. The work machine according to claim 1 or 3, comprising:
a converter that converts the electric power supplied from the battery unit; and
an auxiliary battery that charges the electric power converted by the converter,
wherein the converter and the auxiliary battery are disposed in such a manner that at least a part thereof faces each other in an up-down direction.

9. The work machine according to claim 1, comprising:
the battery unit disposed in an engine room;
a first charger that is disposed in the engine room and charges the battery unit with electric power supplied from an external power supply; and
a second charger that is disposed in the engine room and charges the battery unit with electric power supplied from the external power supply,
wherein the work machine has, as a charging mode of the battery unit, a normal charging mode in which the battery unit is charged by the first charger alone and a quick charging mode in which the battery unit is charged by the first charger and the second charger.

10. The work machine according to claim 9, wherein the first charger and the second charger are located above the battery unit.

11. The work machine according to claim 9 or 10, wherein the first charger and the second charger are disposed in such a manner that at least a part thereof overlaps each other in an up-down direction.

12. The work machine according to claim 9 or 10, wherein the first charger and the second charger are disposed adjacent to each other.

13. The work machine according to claim 9 or 10, further comprising a charging controller that controls the first charger and the second charger, wherein the charging controller is located above the battery unit.

14. The work machine according to claim 1, comprising:
the battery unit that supplies electric power to at least the electric motor and is disposed in an air-cooled space constituting a part of an engine room having a first opening portion and a second opening portion;
a cooling device that generates an airflow passing through the air-cooled space from at least the first opening portion toward the second opening portion; and
an electrical device disposed in the air-cooled space.

15. The work machine according to claim 14, wherein the electrical device is located between the first opening portion and the battery unit in a plan view in such a manner that at least a part thereof faces the first opening portion.

16. The work machine according to claim 1 or 15, further comprising a machine body frame that supports the battery unit, wherein at least a part of the electrical device is located outside the machine body frame in a plan view.

17. The work machine according to claim 1 or 15,
wherein the cooling device has a fan that generates the airflow by discharging air in the air-cooled space from the second opening portion to an outside of the air-cooled space, and the fan is located between the second opening portion and the battery unit in a plan view in such a manner that at least a part thereof faces the second opening portion.

18. The work machine according to claim 1 or 15, further comprising an electric device disposed above the battery unit in the air-cooled space.

19. The work machine according to claim 1 or 15, wherein the electrical device includes a power distributor that distributes electric power of the battery unit.

20. The work machine according to claim 1 or 15, wherein the cooling device has a first radiator for cooling a first heat source and a second radiator for cooling a second heat source.
